# EUROPÄISCHE PATENTSCHRIFT

(11) **EP 3 754 204 B1**
(45) Veröffentlichungstag und Bekanntmachung des Hinweises auf die Patenterteilung: **16.03.2022**
(21) Anmeldenummer: 20171999.4
(22) Anmeldetag: 29.04.2020
(51) Int. Cl.: F04D 25/06, F04D 29/058

(54) **LÜFTER**
VENTILATOR
AÉRATEUR

(30) Priorität: 17.06.2019 EP 19180504
(43) Veröffentlichungstag der Anmeldung: 23.12.2020
(73) Patentinhaber: Levitronix GmbH, 8005 Zürich (CH)
(72) Erfinder: Holenstein, Thomas, 5222 Umiken (CH); Wassmer, Florian, 5000 Aarau (CH)
(74) Vertreter: IPS Irsch AG

(56) Entgegenhaltungen:
- EP-A1- 3 115 616
- EP-B1- 2 064 450
- US-A1- 2006 119 198

## Beschreibung

Die Erfindung betrifft einen Lüfter mit einem Rotor zum Erzeugen eines Fluidstroms gemäss dem Oberbegriff des unabhängigen Patentanspruchs.

Lüfter werden häufig zur Kühlung verschiedenster Geräte oder auch zur Belüftung verschiedenster Gebäude, Anlagen oder Vorrichtungen eingesetzt. Dabei ist es üblicherweise die Aufgabe eines Lüfters, einen Fluidstrom und insbesondere einen Luftstrom zu generieren, der dann beispielsweise als Wärmeträger einem bestimmten Ort Wärme entzieht oder auch Wärme zuführt. Auch kann der Fluidstrom bzw. der Luftstrom dazu dienen, unerwünschte Gasansammlungen zu entfernen bzw. durch Frischluft zu ersetzen. Beispiele für den Einsatz von Lüftern sind die Kühlung von elektronischen Schaltungen oder Netzteilen beispielsweise in Computern. Auch können Lüfter in Rohrleitungen oder Leitungssystemen integriert sein, um dort einen gewünschten Durchfluss zu generieren oder ein Druckniveau zu halten. Gerade bei solchen Anwendungen ist es natürlich wünschenswert, dass die Lüfter eine kompakte Bauform aufweisen. Dennoch sollen sie eine hohe Leistung erbringen, weshalb die Lüfter sehr häufig mit äusserst hohen Drehzahlen betrieben werden.

Bei vielen Anwendungen ist es zudem so, dass die Lüfter in verstaubter oder sonst wie verschmutzter Umgebung betrieben werden. Staub- oder Schmutzablagerungen insbesondere an den Lagern des Rotors können zu einem sehr hohen Verschleiss und zu einer kurzen Lebensdauer führen. Um insbesondere auch dieses Problem zu adressieren, sind Lüfter bekannt, bei denen der Rotor berührungslos, das heisst insbesondere ohne mechanische Lager gelagert ist. Bei diesen Lüftern ist beispielsweise der Rotor mit Hilfe magnetischer bzw. elektromagnetischer Kräfte gelagert, wozu in der Regel mindestens ein Magnetlager vorgesehen ist. Bei den Magnetlagern unterscheidet man prinzipiell zwischen einer passiven und einer aktiven magnetischen Lagerung. Eine passive magnetische Lagerung oder Stabilisierung ist nicht ansteuerbar oder regelbar. Sie beruht üblicherweise auf Reluktanzkräften. Passive magnetische Lagerungen oder Stabilisierungen arbeiten somit ohne Energiezufuhr von aussen. Eine aktive magnetische Lagerung ist eine Lagerung, die ansteuerbar ist. Bei einer aktiven magnetischen Lagerung kann die Position des zu lagernden Körpers aktiv, beispielsweise durch die Einprägung elektromagnetischer Felder beeinflusst bzw. geregelt werden. Ein Lüfter mit einem berührungslos magnetisch gelagerten Rotor ist beispielsweise aus der europäischen Patentschrift EP-B-2 064 450 bekannt. Dort wird ein Lüfter vorgeschlagen, der mindestens ein passives radiales Magnetlager und ein aktives, d.h. regelbares axiales Magnetlagersystem umfasst.

Außerdem offenbart auch US 2006/119198 A1 einen Lüfter mit einem magnetisch gelagerten Rotor.

Andererseits sind Lüfter, welche keine mechanischen Lager aufweisen, insbesondere auch für die Förderung hochreiner Gase geeignet, weil keine Gefahr des Abriebs besteht wie er in mechanischen Lagern auftreten kann. Solche hochreinen Gase werden beispielsweise in der Lasertechnologie verwendet.

Auch wenn sich die magnetische Lagerung des Rotors in Lüftern bewährt hat, so besteht immer noch Verbesserungsbedarf insbesondere im Hinblick auf eine möglichst kompakte Ausgestaltung des Lüfters bei gleichzeitig hoher Leistungsfähigkeit oder im Hinblick auf den Verschleiss und die Lebensdauer des Lüfters. Gerade in chemisch aggressiveren Umgebungen, wie sie beispielsweise in der Halbleiterindustrie vorkommen, sind Lüfter, beispielsweise in Rohrleitungssystem, aggressiven Substanzen ausgesetzt, z. B. korrosiven Dämpfen oder Gasen, partikelbeladenen Luftströmen, die Feststoffteilchen enthalten oder feine Tröpfchen von Flüssigkeiten, beispielsweise Photolack, oder dem in der Halbleiterfertigung als Ätzgas verwendeten Schwefelhexafluorid (SF₆). Solche aggressiveren Umgebungen führen häufig zu einem erhöhten Verschleiss oder zu einer unbefriedigend kurzen Lebensdauer des Lüfters. Diesen Problemen widmet sich die vorliegende Erfindung. Es ist daher eine Aufgabe der Erfindung, einen sehr kompakten und gleichzeitig leistungsfähigen Lüfter vorzuschlagen, der ohne mechanische Lager für den Rotor betreibbar ist, und auch für einen Einsatz in aggressiveren Umgebungsbedingungen geeignet ist.

Der diese Aufgabe lösende Gegenstand der Erfindung ist durch die Merkmale des unabhängigen Patentanspruchs gekennzeichnet.

Erfindungsgemäss wird also ein Lüfter vorgeschlagen, mit einem Rotor zum Erzeugen eines Fluidstroms und mit einem Stator, der mit dem Rotor einen elektromagnetischen Drehantrieb zum Rotieren des Rotors um eine axiale Richtung bildet, wobei der Drehantrieb als Aussenläufer ausgestaltet ist, wobei der Rotor einen magnetisch wirksamen Kern umfasst, welcher ringförmig ausgestaltet ist, sowie ein Laufrad, welches eine Nabe umfasst, auf der eine Mehrzahl von Flügeln zur Erzeugung des Fluidstroms angeordnet sind, wobei der Stator als Lager- und Antriebsstator ausgestaltet ist, mit welchem der Rotor berührungslos magnetisch antreibbar und berührungslos magnetisch bezüglich des Stators lagerbar ist, wobei der Rotor in einer zur axialen Richtung senkrechten radialen Ebene aktiv magnetisch gelagert ist, wobei die Nabe des Laufrads den magnetisch wirksamen Kern des Rotors vollständig umschliesst, und wobei der Stator in einem Statorgehäuse aus einem niederpermeablen Material eingekapselt ist.

Vorzugsweise ist der Fluidstrom ein Luftstrom.

Um eine sehr kompakte Ausgestaltung des Lüfters zu ermöglichen, ist der elektromagnetische Drehantrieb des Lüfters nach dem Prinzip des lagerlosen Motors ausgestaltet. Der lagerlose Motor ist dem Fachmann mittlerweile hinlänglich bekannt, sodass eine detaillierte Beschreibung seiner Funktion nicht mehr notwendig ist. Der Stator ist als Lager- und Antriebsstator ausgestaltet, mit welchem der Rotor im Betriebszustand berührungslos magnetisch um die axiale Richtung antreibbar-also in Rotation versetzbar- ist und bezüglich des Stators berührungslos magnetisch lagerbar ist. Die axiale Richtung ist dabei durch die Solldrehachse des Rotors festgelegt.

Mit dem Begriff lagerloser Motor ist gemeint, dass der Rotor berührungslos magnetisch gelagert ist, wobei keine separaten Magnetlager vorgesehen sind. Der Stator ist sowohl Stator des elektrischen Antriebs als auch Stator der magnetischen Lagerung. Dabei umfasst der Stator Wicklungen, mit denen sich ein magnetisches Drehfeld erzeugen lässt, welches zum einen ein Drehmoment auf den Rotor ausübt, das dessen Rotation bewirkt, und welches zum anderen eine beliebig einstellbare Querkraft auf den Rotor ausübt, sodass dessen radiale Position -also seine Position in der radialen Ebene- aktiv steuerbar bzw. regelbar ist. Somit sind zumindest drei Freiheitsgrade des Rotors aktiv regelbar. Bezüglich seiner Auslenkung in axialer Richtung ist der Rotor passiv magnetisch, das heisst nicht ansteuerbar, durch Reluktanzkräfte stabilisiert. Auch bezüglich der verbleibenden zwei Freiheitsgrade, nämlich Verkippungen bezüglich der zur axialen Richtung senkrechten radialen Ebene ist der Rotor ebenfalls passiv magnetisch stabilisiert.

Es ist ein wesentlicher Aspekt bei dem Prinzip des lagerlosen Motors, dass im Lager-und Antriebsstator nicht zwischen einer Lagereinheit und einer Antriebseinheit unterschieden werden kann. Aus dem Stand der Technik sind beispielsweise elektromagnetische Antriebs- und Lagervorrichtungen bekannt, bei welchen der Stator des Antriebs und der Stator der magnetischen Lagerung zu einer baulichen Einheit zusammengefügt sind. Dabei umfasst der Stator eine oder mehrere Lagereinheiten sowie eine Antriebseinheit, die z. B. zwischen zwei Lagereinheiten angeordnet sein kann. Solche Vorrichtungen zeigen also eine von der Antriebseinheit separierbare Lagereinheit, die ausschliesslich der magnetischen Lagerung dient. Derartige Vorrichtungen sind jedoch nicht als lagerlose Motoren im Sinne der vorliegenden Anmeldung zu verstehen, weil hier tatsächlich separate Lagereinheiten vorhanden sind, welche getrennt von der Antriebsfunktion die Lagerung des Rotors realisieren. Bei einem lagerlosen Motor im Sinne der vorliegenden Anmeldung ist es nicht möglich, den Stator in eine Lagereinheit und in eine Antriebseinheit aufzuteilen. Gerade diese Eigenschaft ist es nämlich, die dem lagerlosen Motor seinen Namen gibt.

Ein weiterer wesentlicher Aspekt der vorliegenden Erfindung ist es, dass sowohl der magnetisch wirksame Kern des Rotors als auch der Stator vollständig und vorzugsweise hermetisch umschlossen sind. Hierdurch sind der magnetisch wirksame Kern des Rotors sowie der Stator und insbesondere z. B. die Wicklungen auf dem Stator oder die Spulenkerne des Stators, zuverlässig geschützt, insbesondere auch in chemisch aggressiven Umgebungen, in denen der Lüfter beispielsweise mit korrosiven Gasen, Dämpfen oder anderen korrosiven oder säurehaltigen Fluiden in Berührung kommt. Auch sind der magnetisch wirksame Kern des Rotors und der Stator zuverlässig gegen abrasive Fluide, beispielsweise Slurry, geschützt. Durch das vollständige Umschliessen des magnetisch wirksamen Kerns und des Stators weist der Lüfter selbst in aggressiven Umgebungen einen zumindest deutlich reduzierten Verschleiss und eine erheblich grössere Lebensdauer auf.

Der magnetisch wirksame Kern des Rotors ist vollständig in der Nabe des Laufrads eingeschlossen, die somit eine Ummantelung des Rotors bildet. Der Stator ist in dem Statorgehäuse gekapselt, welches aus einem niederpermeablen Material besteht, also aus einem Material, das nur eine geringe magnetische Permeabilität (magnetische Leitfähigkeit) aufweist. Dieses niederpermeable Material kann beispielsweise ein Kunststoff sein. Als niederpermeabel werden im Rahmen dieser Anmeldung -wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl, die kleiner als 1.1 ist.

Durch die vollständige Ummantelung des magnetischen Kerns des Rotor sowie des Stators, müssen im magnetischen Luftspalt zwischen dem Rotor und dem Stator sowohl die den magnetisch wirksamen Kern des Rotors umschliessende Nabe als auch eine Wandung des Statorgehäuses angeordnet sein. Dies bedingt bezüglich der radialen Richtung einen grossen Abstand zwischen den magnetisch zusammenwirkenden Teilen des Rotors und des Stators, das heisst, der magnetische Luftspalt im magnetischen Kreis von Rotor und Stator ist gross. Überraschenderweise ist trotz dieses grossen magnetischen Luftspalts eine zuverlässige und stabile Lagerung des Rotors bezüglich des Stators möglich.

Vorzugsweise besteht das Laufrad aus einem ersten Kunststoff, und das Statorgehäuse besteht aus einem zweiten Kunststoff. Dabei können der erste und der zweite Kunststoff derselbe Kunststoff sein, oder der erste und der zweite Kunststoff sind verschiedene Kunststoffe.

Gemäss einer bevorzugten Ausgestaltung umfasst der Lüfter ein im Wesentlichen rohrförmiges Gehäuse mit einer Saugseite und mit einer Druckseite, wobei der Rotor und das Statorgehäuse in dem Gehäuse angeordnet sind, und wobei das Statorgehäuse mittels einer Mehrzahl von Streben im Gehäuse fixiert ist. Dadurch kann der Lüfter in einfacher Weise in eine Rohrleitung oder in ein Rohrsystem integriert werden, um dort beispielsweise einen gewünschten Durchfluss oder einen gewünschten Druck zu generieren. Dazu kann das Gehäuse des Lüfters sowohl auf der Saugseite als auch auf der Druckseite jeweils einen Flansch umfassen, mittels welchem der Lüfter an einer Leitung befestigt werden kann. Die Streben, mit denen das Statorgehäuse fixiert ist können vorteilhafterweise als Diffusor für den Lüfter ausgestaltet sein.

Eine weitere bevorzugte Massnahme besteht darin, dass das Statorgehäuse einen ersten Gehäuseabschnitt und einen zweiten Gehäuseabschnitt aufweist, wobei der erste Gehäuseabschnitt innerhalb vom Rotor angeordnet ist und von dem magnetischen Kern des Rotors umgeben ist, und wobei der zweite Gehäuseabschnitt einen Aussendurchmesser aufweist, welcher mindestens so gross ist wie ein Aussendurchmesser des magnetisch wirksamen Kerns des Rotors. Diese optimierte Form des Statorgehäuses ermöglicht es, dass im Statorgehäuse zusätzliche Komponenten wie beispielsweise die Leistungselektronik für den elektromagnetischen Drehantrieb angeordnet werden können und somit durch das Statorgehäuse geschützt sind.

Vorzugsweise umfasst der Lüfter eine Kontrolleinrichtung zur Steuerung oder Regelung des Lüfters, wobei die Kontrolleinrichtung in dem zweiten Gehäuseabschnitt des Statorgehäuses angeordnet ist. Diese Massnahme ermöglicht eine besonders kompakte und platzsparende Ausgestaltung. Die gesamte Kontrolleinrichtung, welche die Leistungselektronik zur Generierung der elektromagnetischen Felder, die Regeleinrichtung für den Antrieb und die Lagerung des Rotors und gegebenenfalls Sensoren oder Auswerteeinheiten umfassen kann, ist in das Statorgehäuse integriert bzw. eingebaut. Somit braucht dem Lüfter nur noch Energie zugeführt werden und gegebenenfalls Signale, beispielsweise zum Starten oder zum Stoppen des Lüfters oder zum Festlegen der Drehzahl. Dazu kann eine Versorgungsleitung vorgesehen sein, welche dem Lüfter elektrische Energie zur Verfügung stellt. Diese Versorgungsleitung ist bevorzugt im Inneren einer der Streben angeordnet, mit denen das Statorgehäuse fixiert ist.

Ferner ist es vorteilhaft, wenn ein Sensor vorgesehen ist, mit welchem ein Druck oder ein Durchfluss des Fluidstroms ermittelbar ist, wobei der Sensor mit der Kontrolleinrichtung signalverbunden ist, und die Kontrolleinrichtung zur Regelung oder zur Steuerung des Drucks oder des Durchflusses ausgestaltet ist. Auf diese Weise kann beispielsweise der Fluidstrom, welcher von dem Lüfter generiert wird, gesteuert oder geregelt werden. Der Sensor kann an der Saugseite oder an der Druckseite angeordnet sein. Insbesondere kann der Sensor auch am Statorgehäuse fixiert sein.

Gemäss einer bevorzugten Ausgestaltung umfasst der Stator eine Mehrzahl von Spulenkernen, von denen sich jeder in radialer Richtung erstreckt, wobei jeder Spulenkern eine konzentrierte Wicklung zur Erzeugung eines elektromagnetischen Drehfelds trägt. Besonders bevorzugt weist der Stator genau sechs Spulenkerne auf, von denen jeder eine konzentrierte Wicklung trägt.

In einer bevorzugten Ausführungsform umfasst der magnetisch wirksame Kern des Rotors einen ringförmigen Rückschluss und eine Mehrzahl von Permanentmagneten, wobei der Rückschluss zusammenhängend ausgestaltet ist und aus einem weichmagnetischen Material gefertigt ist, und wobei jeder Permanentmagnet mit einem sichelförmigen Querschnitt ausgestaltet ist und in die radial innenliegende Seite des Rückschlusses eingepasst ist. Mit dieser Ausführungsform lässt sich einerseits ein sehr gutes Drehmoment und eine sehr gute Steifigkeit der magnetischen Lagerung erzielen und andererseits werden die Kosten für die Permanentmagnete reduziert, weil besonders wenig permanentmagnetisches Material benötigt wird.

Eine weitere vorteilhafte Massnahme besteht darin, dass im Statorgehäuse ein Wärmeleitelement zum Abführen von Wärme vorgesehen ist, wobei das Wärmeleitelement so ausgestaltet ist, dass es zumindest die Kontrolleinrichtung umgibt. Das Wärmeleitelement ist vorzugsweise ein metallisches Wärmeleitelement und besteht beispielsweise aus Aluminium. Das Wärmeleitelement kann beispielsweise becherförmig ausgestaltet sein, sodass es sich entlang der Innenwand des zweiten Gehäuseabschnittes erstreckt

Um die magnetische Lagerung des Rotors zu unterstützen, ist der Rotor vorzugsweise zur fluiddynamischen Stabilisierung des Rotors gegen Verkippungen ausgestaltet. Durch diese fluiddynamische Stabilisierung wird auch die magnetische Lagerung bezüglich der axialen Richtung vorteilhaft gedämpft, sodass ein Schwingen der axialen Lagerung unterbunden wird.

Für die fluiddynamische Stabilisierung gibt es verschiedene Massnahmen, von denen nun in nicht abschliessender Aufzählung einige bevorzugte genannt werden:
Die Nabe des Laufrads weist ein saugseitiges Ende und ein druckseitiges Ende auf, wobei der magnetisch wirksame Kern des Rotors bezüglich der axialen Richtung näher am druckseitigen Ende als am saugseitigen Ende der Nabe angeordnet ist. Das heisst, der magnetisch wirksame Kern ist bezüglich der axialen Richtung nicht in der Nabe des Laufrads zentriert, sondern in Richtung der Druckseite verschoben.

Die Nabe des Laufrads kann an ihrem saugseitigen Ende einen Einlaufbereich umfassen, in welchem die Nabe sich in Richtung des saugseitigen Endes verjüngend ausgestaltet ist.

Das Laufrad kann derart ausgestaltet sein, dass jeder Flügel eine Eintrittskante aufweist, wobei sich jede Eintrittskante senkrecht zur axialen Richtung erstreckt.

Das Laufrad kann derart ausgestaltet sein, dass jeder Flügel eine Austrittskante aufweist, wobei jede Austrittskante unter einem Winkel gegen die axiale Richtung in die Nabe einmündet, der von 90° verschieden ist.

Das Laufrad kann derart ausgestaltet sein, dass jeder Flügel eine Austrittskante aufweist, wobei an den Austrittskanten mindestens ein Stabilisierungsring vorgesehen ist, welcher koaxial mit dem Rotor angeordnet ist.

Auch ist es möglich, dass Laufrad derart auszugestalten, dass jeder Flügel bezüglich der axialen Richtung an einer Position in die Nabe einmündet, welche zwischen dem saugseitigen Ende und dem druckseitigen Ende der Nabe liegt.

Es sind Ausführungsformen des Lüfters möglich, bei denen nur eine beliebige der genannten Massnahmen realisiert ist, sowie solche Ausführungsformen, bei denen eine beliebige Kombination der genannten Massnahmen realisiert ist

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen (teilweise im Schnitt):
- Fig. 1:: eine perspektivische Darstellung eines Ausführungsbeispiels eines erfindungsgemässen Lüfters,
- Fig. 2:: einen Schnitt in axialer Richtung durch das Ausführungsbeispiel entlang der Schnittlinie II-II in Fig. 1,
- Fig. 3: wie Fig. 2, jedoch in einer perspektivischen Darstellung,
- Fig. 4: einen Schnitt durch das Ausführungsbeispiel senkrecht zur axialen Richtung entlang der Schnittlinie IV-IV in Fig. 2,
- Fig. 5:: wie Fig. 4, jedoch in einer perspektivischen Darstellung,
- Fig. 6:: einen Schnitt in axialer Richtung durch den Stator und den magnetisch wirksamen Kern des Rotors für eine Variante des magnetisch wirksamen Kerns des Rotors in einer perspektivischen Darstellung
- Fig. 7:: einen Schnitt senkrecht zur axialen Richtung durch den Stator und den magnetisch wirksamen Kern des Rotors aus Fig. 6 in einer perspektivischen Darstellung entlang der Schnittlinie VII-VII in Fig. 6,
- Fig. 8:: wie Fig. 7, jedoch in einer Aufsicht auf die Schnittfläche,
- Fig. 9:: wie Fig. 8, jedoch zur Verdeutlichung von Abmessungen,
- Fig. 10:: wie Fig. 9, jedoch zur Verdeutlichung weiterer Abmessungen,
- Fig. 11:: wie Fig. 6, jedoch in einer Aufsicht auf die Schnittfläche,
- Fig. 12:: einen Schnitt in axialer Richtung durch eine erste Variante für die Ausgestaltung des Statorgehäuses mit einem Wärmeleitelement in einer perspektivischen Darstellung,
- Fig. 13:: wie Fig. 12, jedoch für eine zweite Variante für die Ausgestaltung des Statorgehäuses,
- Fig. 14:: wie Fig. 12, jedoch für eine dritte Variante für die Ausgestaltung des Statorgehäuses,
- Fig. 15:: eine perspektivische Darstellung des Wärmeleitelements aus Fig. 14, einer dritten Variante für die Ausgestaltung des Statorgehäuses des Ausführungsbeispiels,
- Fig. 16:: eine schematische Schnittdarstellung des Rotors mit den Flügeln des Flügelrads angeordnet im Gehäuse des Lüfters in einem Schnitt entlang der axialen Richtung,
- Fig. 17 - 21:: jeweils wie Fig. 16, jedoch für verschiedene Varianten zur Ausgestaltung des Rotors mit fluiddynamischer Stabilisierung des Rotors, und
- Fig. 22 - 24:: schematische Darstellungen für verschieden Varianten eines Ausführungsbeispiels eines erfindungsgemässen Lüfters, angeordnet in einer Rohrleitung.

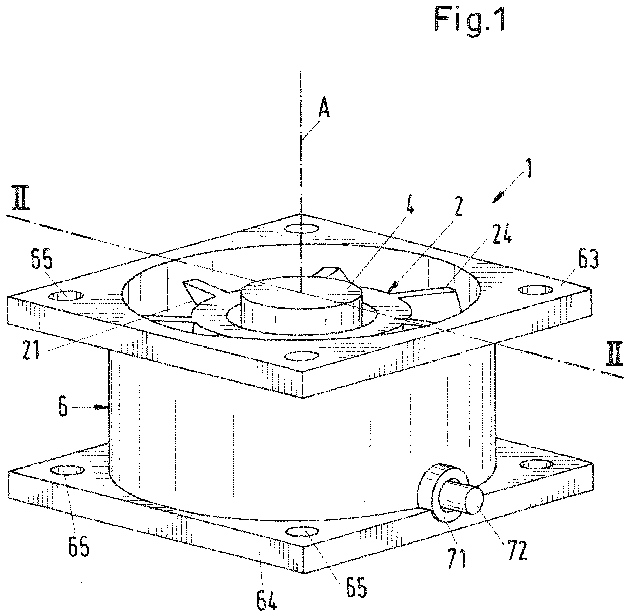

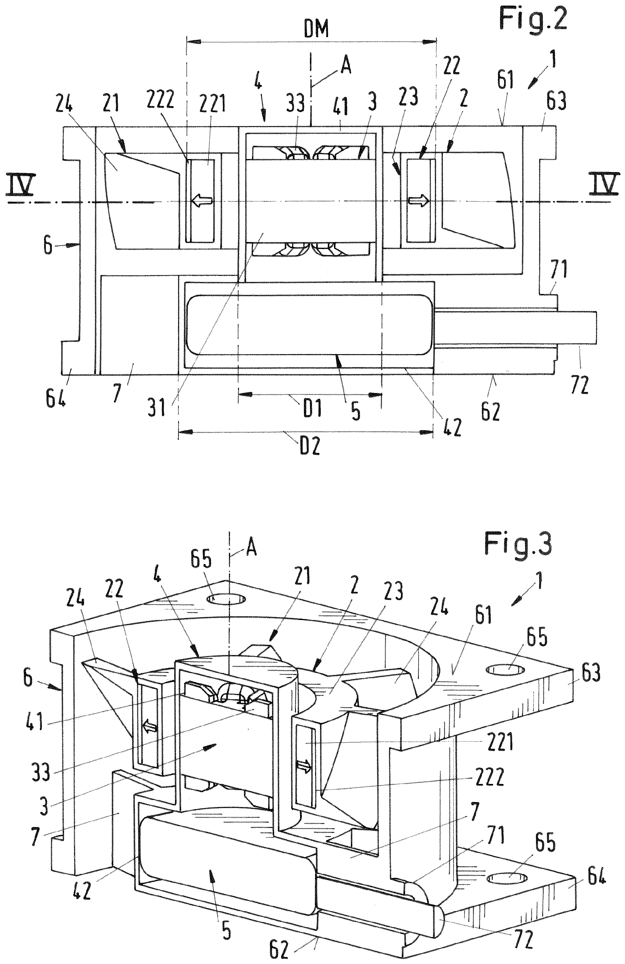

Fig. 1 zeigt in einer perspektivischen Darstellung ein Ausführungsbeispiel eines erfindungsgemässen Lüfters, der gesamthaft mit dem Bezugszeichen 1 bezeichnet ist. Zum besseren Verständnis zeigen Fig. 2 und Fig. 3 noch zwei Schnittdarstellungen dieses Ausführungsbeispiels gemäss der Schnittlinie II-II in Fig. 1, wobei Fig. 2 eine Aufsicht auf die Schnittfläche zeigt, und Fig. 3 den Schnitt in einer perspektivischen Darstellung zeigt.

Der Lüfter 1 umfasst einen Rotor 2 zum Erzeugen eines Fluidstroms, z.B. eines Luft- oder Gasstroms, sowie einen Stator 3, der mit dem Rotor 2 einen elektromagnetischen Drehantrieb bildet, um den Rotor 2 um eine axiale Richtung A zu rotieren. Dabei bilden der Rotor 2 und der Stator 3 einen Drehantrieb, der als Aussenläufer ausgestaltet ist, d.h. der Rotor 2 umgibt den Stator 3 und rotiert im Betriebszustand um den innenliegend angeordneten Stator 3.

Der elektromagnetische Drehantrieb ist nach dem Prinzip des lagerlosen Motors ausgestaltet und umfasst den Rotor 2, welcher berührungslos magnetisch antreibbar ist und spulenfrei ausgestaltet ist, sowie den Stator 3, welcher als Lager- und Antriebsstator ausgestaltet ist, mit welchem der Rotor 2 im Betriebszustand berührungslos magnetisch um eine Solldrehachse antreibbar und bezüglich des Stators 3 berührungslos magnetisch lagerbar ist. Die Solldrehachse definiert die axiale Richtung A. Der Stator 3 ist innenliegend bezüglich des Rotors 2 angeordnet.

Im Folgenden wird mit der Solldrehachse, welche die axiale Richtung A festlegt, diejenige Drehachse bezeichnet, um welche der Rotor 2 rotiert, wenn er sich bezüglich des Stators 3 in einer zentrierten und unverkippten Position befindet. Der Rotor 2 ist dann in einer Ebene zentriert, welche senkrecht zur Mittelachse des Stators 3 ist, und bezüglich dieser Ebene nicht verkippt. Die Solldrehachse fällt in der Regel mit der Mittelachse des Stators 3 zusammen.

Ferner werden im Folgenden die zu der axialen Richtung senkrechten Richtungen allgemein mit radialer Richtung bezeichnet. Mit der radialen Ebene wird diejenige zur Solldrehachse bzw. zur axialen Richtung A senkrechte Ebene bezeichnet, welche die magnetische Mittelebene des Stators 3 ist. Die radiale Ebene definiert die x-y -Ebene eines kartesischen Koordinatensystems, dessen z-Achse in axialer Richtung A verläuft.

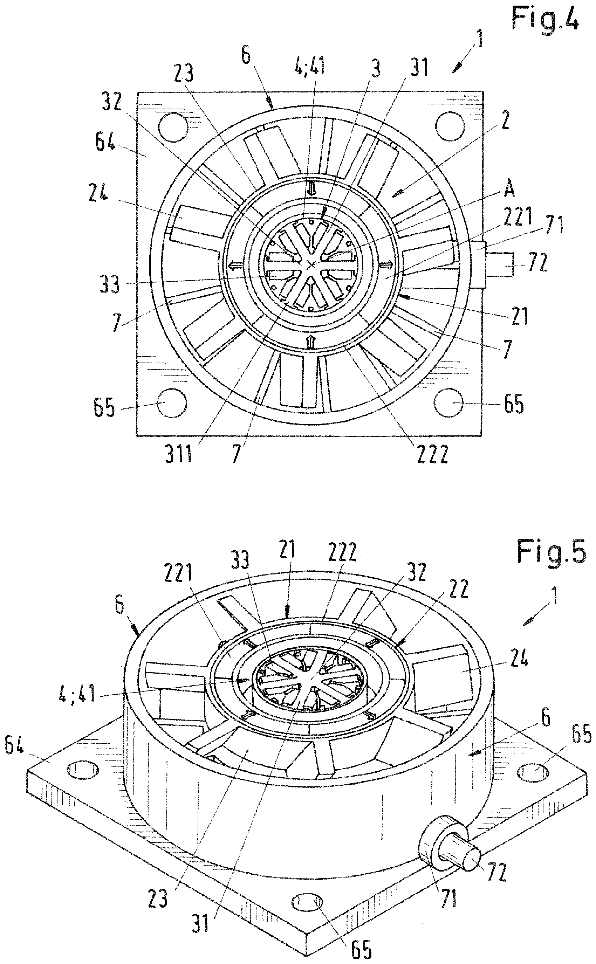

Zum besseren Verständnis zeigen die Fig. 4 und Fig. 5 jeweils einen Schnitt durch das in Fig. 1 dargestellte Ausführungsbeispiel, wobei der Schnitt senkrecht zur axialen Richtung A in der radialen Ebene erfolgt, also in der magnetischen Mittelebene des Stators 3, so wie dies in Fig. 2 durch die Schnittlinie IV-IV dargestellt ist. Fig. 4 zeigt eine Aufsicht auf die Schnittebene, also auf die magnetische Mittelebene des Stators 3, und Fig. 5 zeigt den Schnitt in einer perspektivischen Darstellung.

Der Rotor 2 des Drehantriebs ist spulenfrei ausgestaltet, d. h. auf dem Rotor 2 sind keine Wicklungen vorgesehen. Der Rotor 2 umfasst einen magnetisch wirksamen Kern 22, welcher ringförmig ausgestaltet ist, sowie ein Laufrad 21, welches eine Nabe 23 sowie eine Mehrzahl von Flügeln 24 umfasst, die auf der Nabe 23 angeordnet sind. Das Laufrad 21 ist als Axiallaufrad ausgestaltet. Die Flügel 24 erzeugen im Betriebszustand den Fluidstrom. Die Nabe 23 sowie die Flügel 24 des Laufrads 21 bestehen aus einem ersten Kunststoff. Der Rotor 2 ist sowohl der Rotor 2 des Lüfters 1, mit welchem der Luftstrom generiert wird als auch der Rotor 2 des elektromagnetischen Drehantriebs, mit welchem die Rotation des Laufrads 21 angetrieben wird. Diese auch als Integralrotor bezeichnete Ausführungsform ermöglicht eine besonders kompakte Ausgestaltung des Lüfters 1.

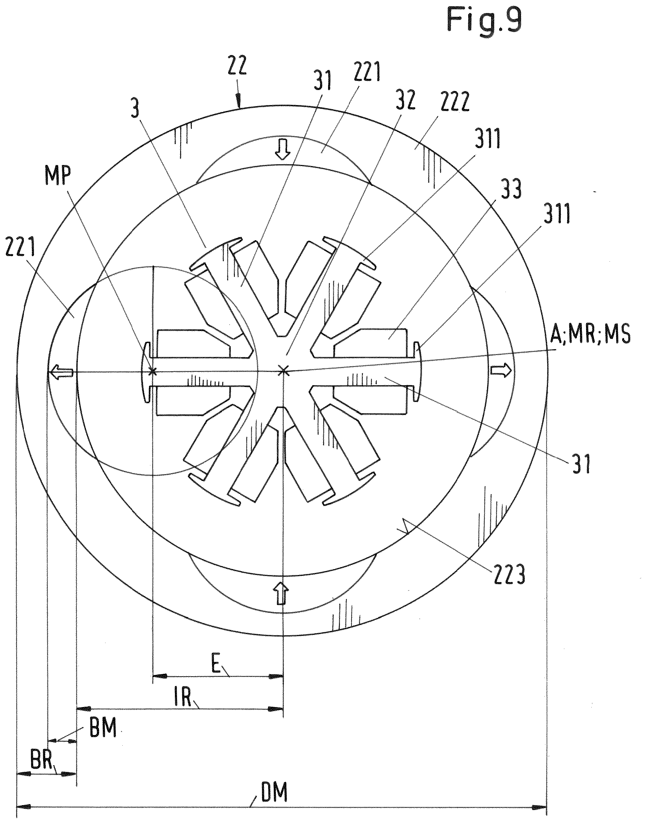

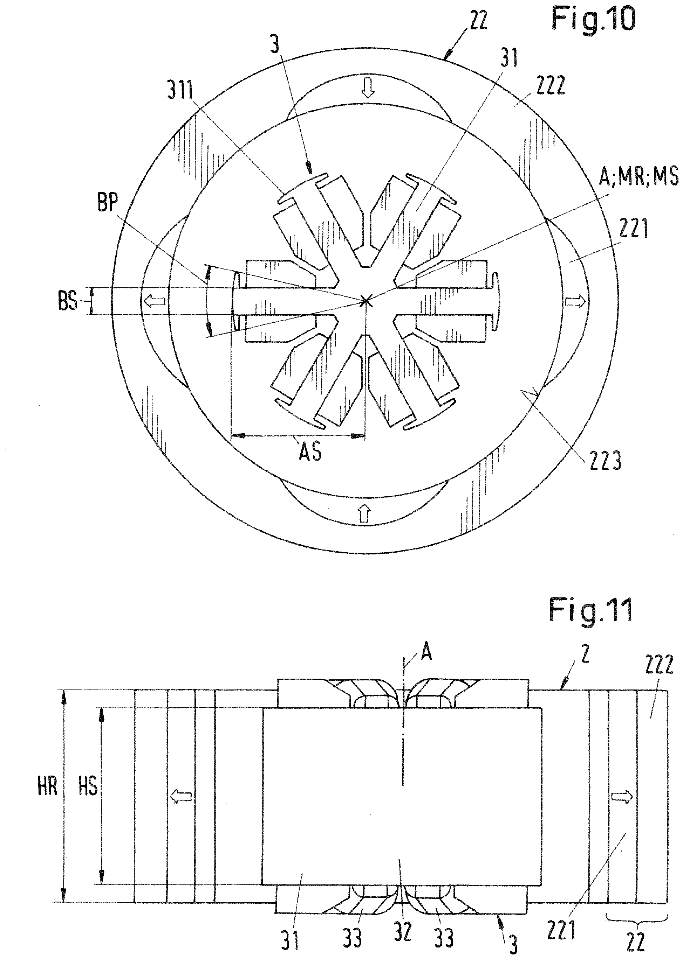

Der magnetisch wirksame Kern 22 des Rotors 2 ist in Form einer Ringscheibe, beziehungsweise eines kreiszylindrischen Rings mit der Höhe HR (Fig. 11) in axialer Richtung A und mit dem Innenradius IR (Fig. 9) ausgestaltet. Mit dem "magnetisch wirksamen Kern 22" des Rotors 2 ist derjenige Bereich des Rotors 2 gemeint, welcher für die Drehmomentbildung sowie für die Erzeugung der magnetischen Lagerkräfte magnetisch mit den Stator 3 zusammenwirkt.

Der magnetisch wirksame Kern 22 des Rotors 24 umfasst einen ringförmigen, radial aussenliegend angeordneten Rückschluss 222, sowie mindestens einen Permanentmagneten 221, der beispielsweise als permanentmagnetischer Ring ausgestaltet sein kann. Natürlich ist es auch möglich, dass eine Mehrzahl von Permanentmagneten 221 vorgesehen ist, von denen jeder beispielsweise als ein Ringsegment ausgestaltet ist. Bei dem hier beschriebenen Ausführungsbeispiel - siehe insbesondere Fig. 4 und Fig. 5 - sind insgesamt vier Permanentmagnete 221 vorgesehen, die sich in ihrer Gesamtheit zu einem Ring ergänzen. Jeder Permanentmagnet 221 ist in radialer oder diametraler Richtung magnetisiert, so wie dies die Pfeile ohne Bezugszeichen in den Fig. 4 und Fig. 5 zeigen. Dabei sind benachbarte Permanentmagnete 221 jeweils in entgegengesetzter Richtung polarisiert, das heisst es grenzen jeweils ein in radialer bzw. diametraler Richtung nach innen polarisierter Permanentmagnet 221 und ein in radialer bzw. diametraler Richtung nach aussen polarisierter Permanentmagnet 221 aneinander. Der Rotor 2 ist hier also vierpolig, d.h. mit der Polpaarzahl zwei ausgestaltet

Als Permanentmagnete bezeichnet man üblicherweise solche ferromagnetischen oder ferrimagnetischen Werkstoffe, die hartmagnetisch sind, also eine hohe Koerzitivfeldstärke aufweisen. Die Koerzitivfeldstärke ist diejenige magnetische Feldstärke, die man benötigt, um einen Stoff zu entmagnetisieren. Im Rahmen dieser Anmeldung wird unter einem Permanentmagneten ein Werkstoff verstanden, der eine Koerzitivfeldstärke, genauer gesagt eine Koerzitivfeldstärke der magnetischen Polarisation aufweist, die mehr als 10'000 A/m beträgt. Alle Permanentmagnete 221 des magnetisch wirksamen Kerns des Rotors bestehen vorzugsweise aus Neodym-Eisen-Bor (NdFeB) oder aus Samarium-Cobalt (SmCo) Legierungen.

Der magnetisch wirksame Kern 22 umfasst ferner den ringförmigen Rückschluss 222, welcher radial aussenliegend um alle Permanentmagnete 221 herum angeordnet. Ist. Der Rückschluss 222 besteht aus einem ferromagnetischen Material und dient der Führung des magnetischen Flusses. Der Rückschluss 222 umschliesst alle Permanentmagnete 221.

Der magnetisch wirksame Kern 22 des Rotors 2 ist in der Nabe 23 des Laufrads 21 angeordnet, sodass die Nabe 23 des Laufrads 21 den magnetisch wirksamen Kern 22 des Rotors 2 vollständig umschliesst und die Nabe 23 eine Ummantelung für den magnetisch wirksamen Kern 22 des Rotors 2 bildet. Dazu kann beispielsweise beim Herstellungsprozess der magnetisch wirksame Kern 22 mit dem ersten Kunststoff, aus dem die Nabe 23 besteht, umgossen werden. Es ist aber auch möglich, die Nabe 23 mit einer ringförmigen Ausnehmung zu versehen, in welche der magnetisch wirksame Kern 22 eingelegt wird. Anschliessend wird die ringförmige Ausnehmung mit einem entsprechend geformten Kunststoffdeckel verschlossen, welcher dann mit dem Rest der Nabe 23 verbunden wird, beispielsweise durch einen Schweissprozess. Anschliessend ist der magnetisch wirksame Kern 22 des Rotors 2 hermetisch eingekapselt.

Der Stator 3 umfasst eine Mehrzahl - hier sechs - Spulenkerne 31, die sternförmig angeordnet sind. Jeder Spulenkern 31 ist stabförmig ausgestaltet und erstreckt sich jeweils von einem im Zentrum des Stators 3 angeordneten zentralen Polstück 32 radial nach aussen und endet in einem gerundet ausgestalteten Polschuh 311 (siehe auch Fig. 9), sodass jeder Spulenkern 31 insgesamt ein im Wesentlichen T-förmiges Aussehen hat. Die radial aussenliegenden Begrenzungsflächen aller Polschuhe 311 liegen alle auf einem Kreiszylinder, der koaxial mit der Längsachse des zentralen Polstücks 32 ist.

Um die für den magnetischen Antrieb und die magnetische Lagerung des Rotors 2 notwendigen elektromagnetischen Drehfelder zu erzeugen, tragen die Spulenkerne Wicklungen. Bei dem hier beschriebenen Ausführungsbeispiel sind die Wicklungen beispielsweise so ausgestaltet, dass um jeden Spulenkern 31 herum jeweils eine konzentrierte Wicklung als diskrete Spule 33 gewickelt ist. Mit diesen Spulen 33 werden im Betriebszustand diejenigen elektromagnetischen Drehfelder erzeugt, mit welchen ein Drehmoment auf den Rotor 2 bewirkt wird, und mit welchen eine beliebig einstellbare Querkraft in radialer Richtung auf den Rotor 2 ausübbar ist, sodass die radiale Position des Rotors 2, also seine Position in der zur axialen Richtung A senkrechten radialen Ebene, aktiv steuerbar bzw. regelbar ist.

Sowohl das zentrale Polstück 32 als auch die Spulenkerne 31 des Stators 3 als auch der Rückschluss 222 des magnetisch wirksamen Kerns 22 des Rotors 2 sind jeweils aus einem weichmagnetischen Material gefertigt, weil sie als Flussleitelemente zur Führung des magnetischen Flusses dienen. Geeignete weichmagnetische Materialien sind beispielsweise ferromagnetische oder ferrimagnetische Materialien, also insbesondere Eisen, Nickel-Eisen oder Silizium-Eisen. Hierbei ist insbesondere bei dem Stator 3 eine Ausgestaltung als Statorblechpaket bevorzugt, bei welcher die Spulenkerne 31 und das zentrale Polstück 32 geblecht ausgestaltet sind, das heisst sie bestehen aus mehreren dünnen Elementen, die gestapelt sind. Auch der Rückschluss 222 des magnetisch wirksamen Kerns 22 des Rotors 2 kann geblecht ausgestaltet sein. Alternativ zur geblechten Ausgestaltung können für den Rotor und/oder für den Stator auch weichmagnetische Verbundwerkstoffe eingesetzt werden, welche aus elektrisch isolierten und zusammengepressten Metallpartikeln bestehen. Insbesondere können diese weichmagnetischen Verbundwerkstoffe, die auch als SMC (Soft Magnetic Composites) bezeichnet werden, aus Eisenpulverpartikeln bestehen, die mit einer elektrisch isolierenden Schicht beschichtet sind. Diese SMC werden dann mittels pulvermetallurgischer Verfahren zu der gewünschten Ausgestaltung geformt.

Wie bereits erwähnt ist der elektromagnetische Drehantrieb mit dem Rotor 2 und dem Stator 3 nach dem Prinzip des lagerlosen Motors ausgestaltet, bei welchem der Rotor 2 berührungslos magnetisch angetrieben und berührungslos magnetisch bezüglich des Stators 3 gelagert wird, wobei keine separaten oder separierbaren Magnetlager für den Rotor 2 vorgesehen sind. Die Lagerfunktion und die Antriebsfunktion werden mit dem gleichen Stator 3 realisiert, wobei es nicht möglich ist, den Stator 3 in eine Lagereinheit und in eine Antriebseinheit aufzuteilen. Die Antriebs- und die Lagerfunktion können nicht voneinander getrennt werden. Für solche Drehantriebe hat sich die Bezeichnung "lagerloser Motor" etabliert, weil eben keine separaten Magnetlager oder magnetische Lagereinheiten für den Rotor 2 vorgesehen sind. Diese besonders effizienten lagerlosen Motoren zeichnen sich insbesondere durch ihre äusserst kompakte Bauform bei gleichzeitiger Realisierung des "berührungslosen" Konzepts aus.

Ein lagerloser Motor ist also ein elektromagnetischer Drehantrieb, bei welchem der Rotor 2 magnetisch bezüglich des Stators 3 gelagert ist, wobei keine separaten magnetischen Lager oder magnetische Lagereinheiten vorgesehen sind. Der Stator 3 ist dazu als Lager- und Antriebsstator ausgestaltet, der sowohl Stator 3 des elektrischen Antriebs als auch Stator 3 der magnetischen Lagerung ist. Mit den Spulen 33 des Lager- und Antriebsstators 3 lassen sich magnetische Drehfelder erzeugen, welche zum einen ein Drehmoment auf den Rotor 2 ausüben, das dessen Rotation bewirkt, und welche zum anderen eine beliebig einstellbare Querkraft auf den Rotor 2 ausüben, sodass dessen radiale Position, also seine Position in der radialen Ebene aktiv steuerbar bzw. regelbar ist. Der lagerlose Motor ist dem Fachmann mittlerweile hinlänglich bekannt, sodass eine detaillierte Beschreibung seiner Funktion nicht mehr notwendig ist.

Somit sind drei Freiheitsgrade des Rotors 2 aktiv steuer- bzw. regelbar, nämlich seine Position in der radialen Ebene (zwei Freiheitsgrade) und seine Rotation um die axiale Richtung A. Bezüglich seiner axialen Auslenkung in Richtung der Solldrehachse ist der Rotor 2 passiv magnetisch, das heisst nicht ansteuerbar, durch Reluktanzkräfte stabilisiert bzw. gelagert. Auch bezüglich der verbleibenden zwei Freiheitsgrade, nämlich Verkippungen bezüglich der zur axialen Richtung A senkrechten radialen Ebene ist der Rotor 2 ebenfalls passiv magnetisch stabilisiert bzw. gelagert. Die radiale Lagerung des Rotors 2 entspricht daher von der Funktion einer aktiven magnetischen Radiallagerung, und die axiale Lagerung entspricht von der Funktion einer passiven axialen magnetischen Lagerung.

Beim lagerlosen Motor werden im Unterschied zu klassischen Magnetlagern die magnetische Lagerung und der Antrieb des Motors über elektromagnetische Drehfelder realisiert. Typischerweise wird in dem lagerlosen Motor die magnetische Antriebs- und Lagerfunktion durch die Überlagerung zweier magnetischer Drehfelder generiert, die üblicherweise als Antriebs- und Steuerfeld bezeichnet werden. Diese beiden mit den Wicklungen bzw. Spulen 33 des Stators 3 erzeugten Drehfelder haben in der Regel eine Polpaarzahl, die sich um eins unterscheidet. Hat also beispielsweise das Antriebsfeld die Polpaarzahl p, so hat das Steuerfeld die Polpaarzahl p+1 oder p-1. Dabei werden mit dem Antriebsfeld auf den Rotor 2 in der radialen Ebene wirkende Tangentialkräfte erzeugt, die ein Drehmoment bewirken, was die Rotation des Rotors 2 um die axiale Richtung A bewirkt. Durch die Überlagerung des Antriebsfelds und des Steuerfelds lässt sich zusätzlich eine beliebig einstellbare Querkraft auf den Rotor 2 in der radialen Ebene erzeugen, mit welcher die Position des Rotors 2 in der radialen Ebene regelbar ist. Es ist also nicht möglich, den elektromagnetischen Fluss, der von den Spulen 33 des Stators 3 generiert wird, aufzuteilen in einen (elektro-) magnetischen Fluss, der nur für den Antrieb des Rotors 2 sorgt und einen (elektro-) magnetischen Fluss, der nur die magnetische Lagerung des Rotors 2 realisiert.

Zur Generierung des Antriebs- und des Steuerfelds ist es einerseits möglich, zwei unterschiedliche Wicklungssysteme zu verwenden, nämlich eines zur Erzeugung des Antriebsfelds und eines zur Erzeugung des Steuerfelds. Die Spulen zur Erzeugung des Antriebsfelds werden dann üblicherweise als Antriebsspulen bezeichnet und die Spulen zur Erzeugung des Steuerfelds als Steuerspulen. Der Strom, der in diese Spulen eingeprägt wird, wird dann als Antriebsstrom bzw. als Steuerstrom bezeichnet. Andererseits ist es aber auch möglich, die Antriebs- und Lagerfunktion mit nur einem einzigen Wicklungssystem zu generieren, sodass es also keine Unterscheidung zwischen Antriebs- und Steuerspulen gibt. Dies kann so realisiert werden, dass die von einer Kontrolleinrichtung 5 jeweils ermittelten Werte für den Antriebs- und den Steuerstrom rechnerisch -also z. B. mit Hilfe von Software - addiert bzw. überlagert werden und der sich daraus ergebende Gesamtstrom in die jeweilige Spulen 33 eingeprägt wird. In diesem Fall ist es natürlich nicht mehr möglich, zwischen Steuer- und Antriebsspulen zu unterscheiden. In dem hier beschriebenen Ausführungsbeispiel ist die letztgenannte Variante realisiert, das heisst, es gibt keine Unterscheidung zwischen Antriebs- und Steuerspulen, sondern es gibt nur ein Wicklungssystem, in dessen sechs Spulen 33 die rechnerisch ermittelte Summe aus dem Antriebs- und dem Steuerstrom eingeprägt wird. Es ist aber natürlich auch möglich, den erfindungsgemässen Lüfter 1 mit zwei getrennten Wicklungssystemen, nämlich jeweils mit separaten Antriebsspulen und separaten Steuerspulen auszugestalten.

Die Sensorik, z. B. zur Positionsbestimmung des Rotors, die Ansteuerung, die Versorgung und die Regelung des als lagerloser Motor ausgestalteten Drehantriebs sind dem Fachmann hinlänglich bekannt und bedürfen hier keiner weiteren Erläuterung.

Bei dem erfindungsgemässen Lüfter 1 ist nicht nur der magnetisch wirksame Kern 22 des Rotors 2 vollständig von der Nabe 23 des Laufrads 21 umschlossen, sondern auch der Stator 3 ist in einem Statorgehäuse 4 aus einem niederpermeablen Material eingekapselt. Vorzugsweise ist dieses niederpermeable Material ein zweiter Kunststoff.

Ein niederpermeables Material ist ein Material, das nur eine geringe magnetische Permeabilität (magnetische Leitfähigkeit) aufweist. Als niederpermeabel werden im Rahmen dieser Anmeldung -wie allgemein üblich- solche Materialien verstanden, deren Permeabilitätszahl (relative Permeabilität) nur wenig oder gar nicht von 1 (Permeabilitätszahl des Vakuums) abweicht. Jedenfalls hat ein niederpermeables Material eine Permeabilitätszahl die kleiner als 1.1 ist. Das niederpermeable Material, weist daher eine deutlich geringere magnetische Leitfähigkeit auf als beispielsweise das ferromagnetische Material, aus welchem die Spulenkerne 31 gefertigt sind.

Wie bereits erwähnt ist dieses niederpermeable Material, aus welchem das Statorgehäuse 4 gefertigt ist, vorzugsweise ein zweiter Kunststoff. Somit besteht vorzugsweise das Laufrad 21 des Rotors 2 aus dem ersten Kunststoff, und das Statorgehäuse 4 ist aus einem zweiten Kunststoff gefertigt. Natürlich ist es möglich und für viele Anwendungen auch bevorzugt, dass der erste Kunststoff und der zweite Kunststoff der gleiche Kunststoff sind. Andererseits ist es auch möglich, dass der erste Kunststoff und der zweite Kunststoff verschiedene Kunststoffe sind.

Der erste und/oder der zweite Kunststoff können beispielsweise einer der folgenden Kunststoffe sein: Polyethylene (PE), Low Density Polyethylene (LDPE), Ultra Low Density Polyethylene (ULDPE), Ethylene Vinyl Acetate (EVA), Polyethylene Terephthalate (PET), Polyvinylchlorid (PVC), Polypropylene (PP), Polyurethan (PU), Polyvinylidene Fluoride (PVDF), Acrylonitrile Butadiene Styrene (ABS), Polyacryl, Polycarbonate (PC), oder Silicone. Für viele Anwendungen sind auch die unter dem Markennamen Teflon bekannten Materialien Polytetrafluoroethylene (PTFE) und und Perfluoralkoxy-Polymere (PFA) als erster und/oder zweiter Kunststoff geeignet.

Vorzugsweise wird einer dieser Kunststoffe als erster Kunststoff verwendet, um den magnetisch wirksamen Kern 22 des Rotors 2 hermetisch einzukapseln, und einer dieser Kunststoffe wird als zweiter Kunststoff verwendet, um den Stator 3 hermetisch einzukapseln. Da es für das Verständnis ausreichend ist, wird im Folgenden nicht mehr zwischen dem ersten und dem zweiten Kunststoff unterschieden.

Da alle genannten Kunststoffe niederpermeabel sind, also den magnetischen Fluss schlecht leiten, sind die in radialer Richtung zwischen dem magnetisch wirksamen Kern 22 des Rotors 2 einerseits und den Polschuhen 311 der Spulenkerne 31 des Stators 3 andererseits angeordneten Bereiche der Nabe 23 und des Statorgehäuses 4 dem magnetischen Luftspalt zwischen dem Rotor 2 und dem Stator 3 zuzurechnen. Der magnetische Luftspalt zwischen dem Rotor 2 und dem Stator 3 ist somit gleich dem Abstand in radialer Richtung zwischen dem magnetisch wirksamen Kern 22 des Rotors 2 und den Polschuhen 311 der Spulenkerne 31 des Stators 3. Daher bedingt die hermetische Kapselung des magnetisch wirksamen Kerns 22 und die hermetische Kapselung des Stators 3 einen magnetischen Luftspalt, der im Vergleich zu anderen lagerlosen Motoren gross ist. Bei zentriertem Rotor 3 beträgt die Breite des magnetischen Luftspalts beispielsweise 4 mm oder sogar noch mehr. Das heisst, dass bei einer Breite des magnetischen Luftspalts von 4mm der maximale Durchmesser des Stators 3 gemessen von einem Polschuh 311 zu dem gegenüberliegenden Polschuh 311 um 8 mm kleiner ist als der Innendurchmesser des magnetisch wirksamen Kerns 22 des Rotors 2.

Der Lüfter 1 umfasst ferner ein Gehäuse 6, welches im Wesentlich rohrförmig ausgestaltet ist und das Laufrad 21 des Rotors 2 koaxial umgibt. Das Gehäuse 6 hat eine Saugseite 61 (Fig. 2, Fig. 3), durch welche der Lüfter 1 die Luft ansaugt, sowie eine Druckseite 62, durch welche der Lüfter 1 die Luft ausstösst. Der Rotor 2 sowie der von ihm umschlossene Stator 3 und das gesamte Statorgehäuse 4 sind in dem rohrförmigen Gehäuse 6 zwischen der Saugseite 61 und der Druckseite 62 angeordnet, wobei das Statorgehäuse 4 über eine Mehrzahl von Streben 7 vorzugsweise an der Druckseite 62 des Gehäuses 6 befestigt ist. Jede Strebe 7 erstreckt sich vom Statorgehäuse 4 in radialer Richtung nach aussen bis an die innere Wandung des rohrförmigen Gehäuses 6. Die Gesamtheit der Streben 7 kann als Diffusor ausgestaltet sein. Vorzugsweise bestehen die Streben 7 aus dem ersten Kunststoff oder aus dem zweiten Kunststoff.

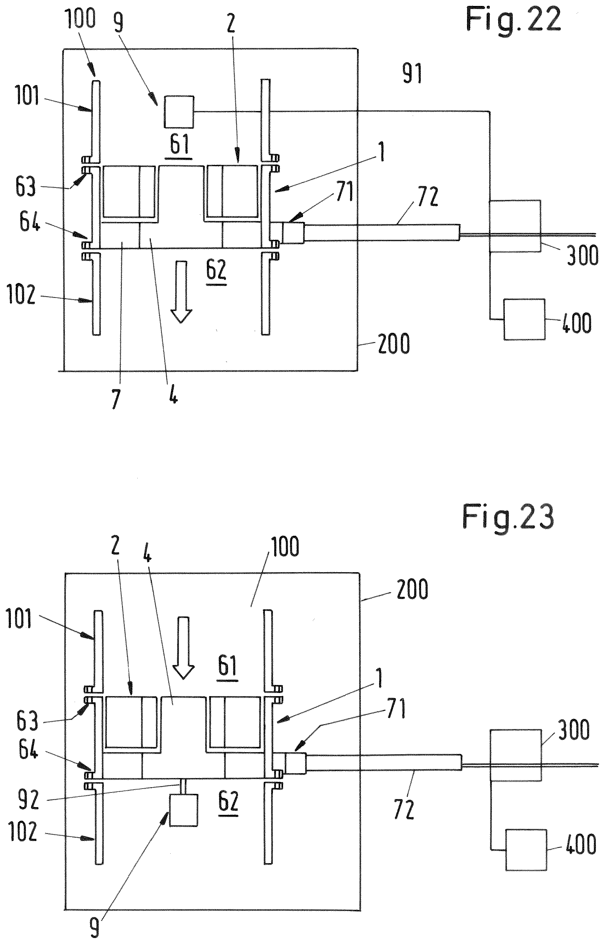

Das Gehäuse 6 weist ferner an der Saugseite 61 einen saugseitigen Flansch 63 auf und an der Druckseite 62 einen druckseitigen Flansch 64. Mittels der Flansche 63 und 64 kann der Lüfter 1 in einfacher Weise in eine Leitung oder in ein Rohrsystem integriert werden (siehe z. B. Fig. 22). Im hier beschriebenen Ausführungsbeispiel sind beide Flansche 63, 64 rechteckig und insbesondere quadratisch ausgestaltet, und in jeder Ecke jedes Flansches 63, 64 ist jeweils eine Montagebohrung 65 zur jeweiligen Aufnahme eines Befestigungsmittels, z. B. einer Schraube (nicht dargestellt) vorgesehen, sodass der Lüfter 1 in einfacher Weise an einem anderen Element, beispielsweise einem anderen Flansch befestigt werden kann.

Das Statorgehäuse 4 umfasst einen ersten Gehäuseabschnitt 41 sowie einen zweiten Gehäuseabschnitt 42, die bezüglich der axialen Richtung A übereinander angeordnet sind, wobei der erste Gehäuseabschnitt 41 an der Saugseite 61 des Gehäuses 6 angeordnet ist und der zweite Gehäuseabschnitt an der Druckseite 62 des Gehäuses 6. Jeder Gehäuseabschnitt 41, 42 hat eine zylindrische Form, wobei der Aussendurchmesser D2 (Fig.2) des zweiten Gehäuseabschnitts 42 grösser ist als der Aussendurchmesser D1 des ersten Gehäuseabschnitts 41. Insgesamt umschliesst das Statorgehäuse 4 also einen Raum, der entsteht, wenn man ein L um den langen Schenkel rotiert.

Der Aussendurchmesser D1 des ersten Gehäuseabschnitts 41 ist kleiner als der Innendurchmesser einer zentralen Ausnehmung in der Nabe 23 des Rotors 2, sodass der erste Gehäuseabschnitt 41 in diese zentrale Ausnehmung einführbar ist. Der Stator 3 des elektrischen Drehantriebs ist im ersten Gehäuseteil 41 des Statorgehäuses 4 angeordnet, sodass der Stator 3 vom magnetisch wirksamen Kern 22 des Rotors 2 umgeben wird, wenn das Statorgehäuse 4 in die zentrale Ausnehmung in der Nabe 23 des Rotors 2 eingeführt ist. Hieraus resultiert die für einen Aussenläufer übliche Anordnung eines Drehantriebs, bei welcher der Stator 3 radial innenliegend vom Rotor 2 umgeben wird.

Der Aussendurchmesser D2 des zweiten Gehäuseabschnitts 42 des Statorgehäuses 4 ist so bemessen, dass er mindestens so gross ist wie der Aussendurchmesser DM des magnetisch wirksamen Kerns 22 des Rotors 2. Die Streben 7, mit welchen das Statorgehäuse 4 im Gehäuse 6 fixiert ist, sind am zweiten Gehäuseabschnitt 42 angeordnet und erstrecken sich von dort jeweils in radialer Richtung bis zur inneren Wandung des Gehäuses 6. Im zweiten Gehäuseabschnitt 42 des Statorgehäuses 4, das darstellungsgemäss unterhalb des Rotors 2 angeordnet ist, ist die Kontrolleinrichtung 5 vorgesehen, mit welcher der Lüfter 1 angetrieben und geregelt wird. Die Kontrolleinrichtung 5 umfasst die Leistungselektronik, mit welcher der Strom für die Spulen 33 generiert wird, sowie eine Regel- und Steuereinrichtung, mit welcher der Antrieb des Rotors 2 sowie die radiale Position des Rotors 2 geregelt, bzw. gesteuert wird. Ebenso kann die Kontrolleinrichtung 5 einen Fluss- und/oder Druckregelkreis umfassen, welcher nach dem Anschluss eines optionalen Druck- oder Durchfluss-Sensors aktiviert werden kann. Die Leistungselektronik ist vorzugsweise als Platine bzw. PCB (printed circuit board) ausgestaltet. Ferner kann die Kontrolleinrichtung 5 verschiedene Sensoren umfassen sowie eine Auswerteeinheit zur Verarbeitung der von Sensoren gelieferten Signale. Dadurch, dass auch die gesamte Kontrolleinrichtung 5 im Statorgehäuse 4 angeordnet ist, ergibt sich eine äusserst kompakte und platzsparende Ausgestaltung des Lüfters 1. Zudem ist die Kontrolleinrichtung 5 im hermetisch dichten Statorgehäuse 4 auch gegen chemisch aggressive Umgebungsbedingungen sowie gegen Staub und Verschmutzung geschützt.

Ferner ist eine Durchführung 71 für ein Kabel 72 vorgesehen, über welches die Kontrolleinrichtung 5 mit Energie versorgt wird. Das Kabel 72 kann ferner auch für die Übertragung von analogen oder digitalen Signalen in die Kontrolleinrichtung 5 oder aus der Kontrolleinrichtung 5 genutzt werden. Dazu ist das Kabel 72 beispielsweise mit einer Spannungsquelle und mit einer Kommunikationsschnittstelle 400 (Fig. 22) verbunden. Besonders bevorzugt ist die Durchführung 71 von dem zweiten Gehäuseabschnitt 42 des Statorgehäuses 4 zu der Umgebung des Lüfters 1 in einer der Streben 7 vorgesehen bzw. die Durchführung 71 fungiert als eine der Streben 7.

Da somit sowohl der magnetisch wirksame Kern 22 des Rotors 2 als auch der Stator 3 als auch die Kontrolleinrichtung 5 hermetisch gekapselt sind, eignet sich der Lüfter 1 hervorragend für den Einsatz in problematischen Umgebungen, wie sie beispielsweise in der Halbleiterindustrie vorkommen. Hier können korrosive Dämpfe, Gase oder auch ätzende Substanzen vorhanden sein, die herkömmliche Lüfter bereits nach kurzer Betriebsdauer erheblich schädigen können. Aber auch gegenüber mechanischen Verschmutzungen der Umgebung, beispielsweise Staub oder Festkörperpartikel weist der Lüfter 1 eine besonders gute Resistenz auf. Der Lüfter 1 ist aufgrund des lagerlosen Konzepts sowie der hermetischen Kapselung des Stators 3 und des magnetisch wirksamen Kerns 22 des Rotors 2 insbesondere auch für den Einsatz in hochreinen Umgebungen oder für die Förderung hochreiner Gase geeignet wie sie beispielsweise in der Lasertechnik eingesetzt werden.

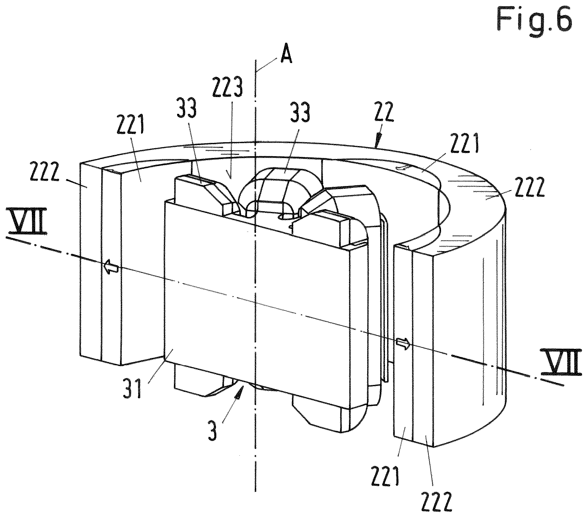

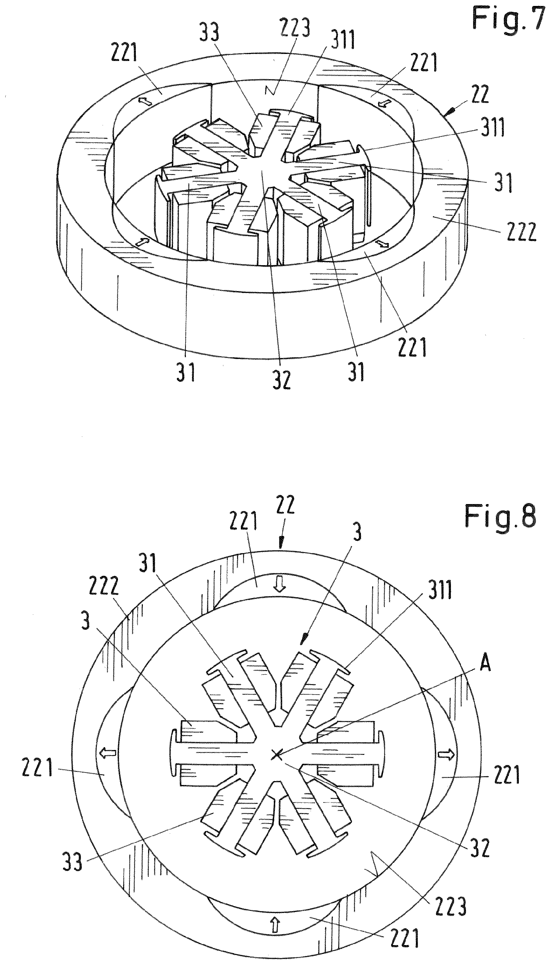

Die Fig. 6 - Fig. 8 zeigen eine bevorzugte Variante für die Ausgestaltung des magnetisch wirksamen Kerns 22 des Rotors 2. Da es für das Verständnis ausreichend ist sind in Fig. 6, Fig. 7 und Fig. 8 aus Gründen der besseren Übersicht jeweils nur der magnetisch wirksame Kern 22 des Rotors 2 sowie der Stator 3 dargestellt. Fig. 6 zeigt die Variante in einer perspektivischen Schnittdarstellung, wobei der Schnitt in axialer Richtung A durch die Mitte des zentralen Polstücks 32 des Stators 3 erfolgt. Fig. 7 zeigt diese Variante für den magnetisch wirksamen Kern 22 des Rotors 2 in einer perspektivischen Schnittdarstellung entlang der Schnittlinie VII-VII in Fig. 6. Der Schnitt erfolgt senkrecht zur axialen Richtung A durch die Mitte des Stators 3. Fig. 8 zeigt eine Aufsicht auf die Schnittfläche der Fig. 7.

Bei dieser ebenfalls ringförmigen Variante für den magnetisch wirksamen Kern 22 des Rotors 2 ist radial aussenliegend der ringförmige Rückschluss 222 vorgesehen sowie eine Mehrzahl, hier vier, Permanentmagnete 221. Der Rückschluss 222 ist zusammenhängend ausgestaltet und aus einem weichmagnetischen Material gefertigt. Jeder der vier Permanentmagnete 221 ist derart ausgestaltet, dass er senkrecht zur axialen Richtung A einen sichelförmigen Querschnitt hat und sich bezüglich der axialen Richtung A über die gesamte Höhe HR (Fig. 11) des magnetisch wirksamen Kerns 22 des Rotors 2 erstreckt. Die Permanentmagnete 221 sind äquidistant bezüglich der Umfangsrichtung an der radial innenliegenden Seite des Rückschlusses 222 angeordnet und in entsprechend geformte Ausnehmungen in der radial innenliegenden Seite des Rückschlusses 222 eingepasst.

Somit wird jeder Permanentmagnet 22 bezüglich der radialen Richtung von zwei Kreiszylindersegmenten begrenzt, nämlich radial innenliegend durch ein Kreiszylindersegment, welches den gleichen Radius und den gleichen Mittelpunkt hat wie die radial innenliegende Begrenzungsfläche 223 des magnetisch wirksamen Kerns 22 des Rotors 2, und radial aussenliegend durch ein Kreiszylindersegment, dessen Mittelpunkt gegenüber dem Mittelpunkt der radial innenliegenden Begrenzungsfläche 223 des magnetisch wirksamen Kerns 22 verschoben ist und dessen Radius kleiner ist als der Radius der radial innenliegenden Begrenzungsfläche des magnetisch wirksamen Kerns 22.

Jeder Permanentmagnet ist in radialer oder in diametraler Richtung magnetisiert, wie dies die Pfeile ohne Bezugszeichen in den Fig. 6 - Fig. 8 darstellen. Dabei sind die Permanentmagnete 221 bezüglich der Umfangsrichtung des Rotors 2 wechselweise in radialer oder in diametraler Richtung nach aussen und in radialer oder in diametraler Richtung nach innen magnetisiert, sodass jeweils benachbarte Permanentmagnete 221 in entgegengesetzter Richtung magnetisiert sind. Der Rotor 2 ist also vierpolig, d.h. mit der Polpaarzahl 2 ausgestaltet.

Für einen möglichst leistungsstarken und effizienten Lüfter 1 wird eine hohe Drehzahl des Rotors 2 bevorzugt, weshalb der Rotor 2 vorzugsweise vierpolig ausgestaltet ist.

Insbesondere auch im Hinblick auf eine zuverlässige berührungslose magnetische Lagerung des Rotors 2 ist es speziell bevorzugt, dass der ringscheibenförmige magnetisch wirksame Kern 22 des Rotors 2 --unabhängig von seiner spezifischen Ausgestaltung-- einen Innendurchmesser aufweist, der mindestens 1.5 mal und vorzugsweise zweimal so gross ist wie die Höhe HR (Fig. 11) des magnetisch wirksamen Kerns 22 in axialer Richtung A. Falls sich die Höhe HR in radialer Richtung gesehen über den magnetisch wirksamen Kern 22 ändert, also nicht konstant ist, so sollte zumindest an der radial innenliegenden Begrenzungsfläche 223 des magnetisch wirksamen Kerns 22 die Bedingung erfüllt sein, dass der Innendurchmesser des magnetisch wirksamen Kerns 22 mindestens 1.5 mal und vorzugsweise zweimal so gross ist wie die Höhe HR des magnetisch wirksamen Kerns 22. Das heisst HR bezeichnet die Höhe des magnetisch wirksamen Kerns 22 an seiner radial innenliegenden Begrenzungsfläche 223.

Im Folgenden werden anhand der Fig. 9 bis Fig. 11 einige bevorzugte geometrische Abmessungen für den magnetisch wirksamen Kern 22 des Rotors 2 sowie für den Stator 3 erläutert, welche im Hinblick auf den berührungslosen Antrieb des Rotors 2 und die berührungslos magnetische Lagerung des Rotors 2 besonders günstig sind. Die Fig. 9 und Fig. 10 zeigen grundsätzlich jeweils die gleiche Darstellung wie Fig. 8, also einen Schnitt senkrecht zur axialen Richtung A, jedoch sind einige Abmessungen eingezeichnet. Die Fig. 11 zeigt grundsätzlich die gleiche Darstellung wie Fig. 6, also einen Schnitt in axialer Richtung A, jedoch sind einige Abmessungen eingezeichnet.

MR bezeichnet den geometrischen Mittelpunkt des ringförmigen magnetisch wirksamen Kerns 22 des Rotors 2 in der radialen Ebene.

IR bezeichnet den Innenradius des magnetisch wirksamen Kerns 22. Das heisst IR bezeichnet den halben Innendurchmesser des magnetisch wirksamen Kerns 22.

HR bezeichnet die Höhe des magnetisch wirksamen Kerns 22 in axialer Richtung A an der radial innenliegenden Begrenzungsfläche 223 des magnetisch wirksamen Kerns 22.

BM bezeichnet die maximale Dicke der Permanentmagnete 221 in radialer Richtung.

BR bezeichnet die Dicke des magnetisch wirksamen Kerns 22 in radialer Richtung.

MP bezeichnet den in der radialen Ebene liegenden geometrischen Mittelpunkt des Kreiszylindersegments, welche die radial aussenliegende Begrenzung des Permanentmagneten 221 bildet.

E bezeichnet den Abstand des Mittelpunktes MP vom Mittelpunkt MR des magnetisch wirksamen Kerns 22 des Rotors 2.

MS bezeichnet den geometrischen Mittelpunkt des Stators 3 bzw. des zentralen Polstücks 32 des Stators 3 in der radialen Ebene.

AS bezeichnet den Aussenradius des Stators 3, d. h. den Radius des Kreiszylinders, auf welchem die Polschuhe 311 angeordnet sind.

BP bezeichnet den Öffnungswinkel der Polschuhe 311 der Spulenkerne 31 des Stators 3. Dieser Öffnungswinkel BP ist derjenige Winkel, welchen die beiden Verbindungslinien einschliessen, die den Mittelpunkt MS mit den beiden in Umfangsrichtung gesehenen Enden eines Polschuhs 311 verbinden, also die Verbindungslinien von den beiden Enden des kurzen Schenkels des T der im Wesentlichen T-förmigen Spulenkerne 31 zum Mittelpunkt MS.

BS bezeichnet die Breite der Spulenkerne 31 in der radialen Ebene.

HS bezeichnet die Höhe der Spulenkerne 21 in axialer Richtung A. Falls sich die Höhe HS der Spulenkerne 21 in radialer Richtung ändert, bezeichnet HS die Höhe der Spulenkerne 31 an den radial aussenliegenden Enden, also an den Polschuhen 311. Im hier beschriebenen Ausführungsbeispiel ist die Höhe HS in radialer Richtung gesehen konstant, und das zentrale Polstück 32 hat ebenfalls die Höhe HS in axialer Richtung A.

Die folgenden relativen Abmessungen sind bevorzugt:
Das Verhältnis BM zu BR ist vorzugsweise 0.5 bis 0.9 und besonders bevorzugt 0.7.
Das Verhältnis E zu IR ist vorzugsweise 0.25 bis 0.65 und besonders bevorzugt 0.45.
Das Verhältnis BS zu AS ist vorzugsweise 0.25 bis 0.45 und besonders bevorzugt 0.35.
Das Verhältnis HR zu HS ist vorzugsweise 1.5 bis 2.5 und besonders bevorzugt 2.0.

Der Öffnungswinkel BP der Polschuhe 311 ist vorzugsweise 30° bis 45° und besonders bevorzugt 40°.

Eine weitere bevorzugte Massnahme besteht darin, im Statorgehäuse 4 ein Wärmeleitelement 8 vorzusehen, um die beispielsweise von der Leistungselektronik der Kontrolleinrichtung 5 produzierte Wärme und/oder die vom Stator 3 durch den fliessenden Strom produzierte Wärme bestmöglich zu verteilen oder abzuführen. Das Wärmeleitelement 8 besteht aus einem gut wärmeleitenden Material, beispielsweise aus einem metallischen Werkstoff. Vorzugsweise ist das Wärmeleitelement 8 aus Aluminium gefertigt. Im Folgenden werden verschieden Varianten für das Wärmeleitelement 8 erläutert, wobei das Wärmeleitelement 8 vorzugsweise immer aus Aluminium gefertigt ist.

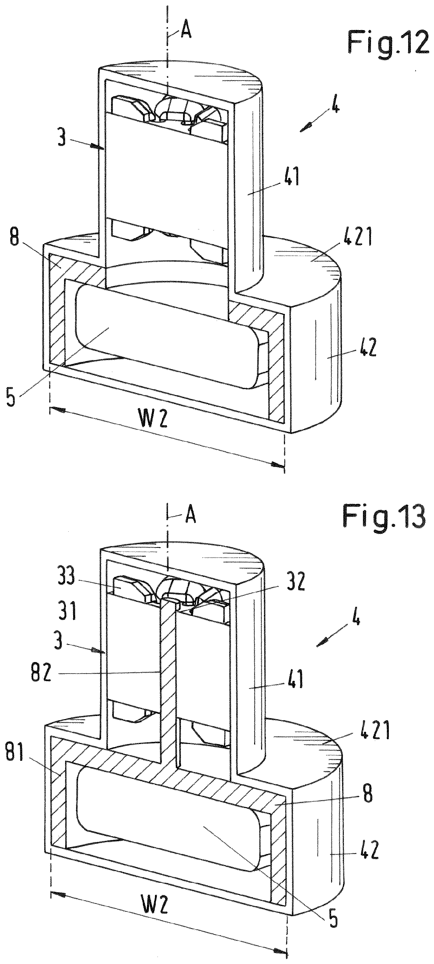

Fig. 12 zeigt in einer perspektivischen Schnittdarstellung eine erste Variante für die Ausgestaltung des Statorgehäuses 4 mit dem Wärmeleitelement 8. Dabei ist das Wärmeleitelement 8 so ausgestaltet und angeordnet, dass es zumindest die Kontrolleinrichtung 5 umgibt, sodass insbesondere die von der Leistungselektronik generierte Wärme möglichst gut verteilt wird.

Bei der in Fig. 12 dargestellten Variante ist das Wärmeleitelement 8 als Hülse ausgestaltet, welche sich vollständig entlang der inneren zylindrischen Wandung des zweiten Gehäuseabschnitts 42 des Statorgehäuses 4 erstreckt, in welchem die Kontrolleinrichtung 5 angeordnet ist. Das Wärmeleitelement 8 liegt dabei unmittelbar innen an der zylindrischen Wandung des zweiten Gehäuseabschnitts 42 an. Das als Hülse ausgestaltete Wärmeleitelement 8 hat also einen Aussendurchmesser W2, welcher dem Innendurchmesser des zylindrischen zweiten Gehäuseabschnitts 42 des Statorgehäuses 4 entspricht. Das Wärmeleitelement 8 hat ein rotationssymmetrisches L-Profil, sodass auch der Ringbereich 421, der diejenige Stirnfläche des zweiten Gehäuseabschnitts 42 begrenzt, welche den ersten Gehäuseabschnitt 41 in radialer Richtung überragt und somit darstellungsgemäss unter dem Rotor 2 angeordnet ist, an seiner Innenseite mit dem Wärmeleitelement 8 ausgekleidet ist. Durch diese Massnahme wird insbesondere die von der Kontrolleinrichtung 5 generierte Wärme grossflächig an der Wandung des zweiten Gehäuseabschnitts 42 verteilt. Durch diese Massnahme kann trotz des thermisch schlecht leitenden Kunststoffes, aus welchem das Statorgehäuse 4 vorzugsweise gefertigt ist, genügend Wärme aus dem Statorgehäuse 4 abgeführt werden. Die Wärme wird auf eine möglichst grosse Fläche an der inneren Wandung des zweiten Gehäuseabschnitts 42 verteilt und in den Kunststoff eingeleitet. Vorteilhaft ist dabei zusätzlich, dass die Wärme in denjenigen Bereich des Statorgehäuses 4 eingespeist wird, der im Betriebszustand eine besonders starke fluiddynamische Anströmung erfährt, durch welche die Wärme zuverlässig abgeführt wird.

Bei der in Fig. 13 dargestellten zweiten Variante für die Ausgestaltung des Statorgehäuses 4 ist zusätzlich auch der Stator 3 thermisch an das Wärmeleitelement 8 gekoppelt. Das Wärmeleitelement 8 umfasst einen Becher 81, welcher ein rotationssymmetrisches U-Profil hat. Der Becher 81 erstreckt sich vollständig entlang der inneren zylindrischen Wandung des zweiten Gehäuseabschnitts 42 des Statorgehäuses 4 und liegt an dieser an. Der Becher 81 hat also den Aussendurchmesser W2, welcher dem Innendurchmesser des zylindrischen zweiten Gehäuseabschnitts 42 des Statorgehäuses 4 entspricht.

Im Unterschied zu der in Fig. 12 dargestellten ersten Variante ist bei der zweiten Variante das Wärmeleitelement 8 genauer gesagt der Becher 81 an der Grenze zwischen dem ersten Gehäuseabschnitt 41 und dem zweiten Gehäuseabschnitt 42 vollständig geschlossen. Zudem umfasst das Wärmeelement 8 einen zentral angeordneten Stab 82, welcher sich in axialer Richtung A erstreckt. Der Stab 82 erstreckt sich von dem Becher 81 in axialer Richtung A vollständig durch das zentrale Polstück 32 des Stators 3 und endet darstellungsgemäss (Fig. 13) oberhalb des zentralen Polstücks 32. Durch diese Massnahme ist auch der Stator 3 thermisch an das Wärmeleitelement 8 angebunden, sodass die im Stator 3 generierte Wärme ebenfalls grossflächig über das Statorgehäuse 4 und insbesondere über die Wandung des zweiten Gehäuseabschnitts 42 verteilt wird. Die im Stator 3 generierte Wärme basiert hauptsächlich auf dem Stromfluss in den Spulen 33, die beispielsweise aus Kupferdraht gefertigt sind (sogenannte Kupferverluste), auf Wirbelströmen, die in den Spulenkernen 31 und dem zentralen Polstück 32, die beispielsweise aus Eisen gefertigt sind, induziert werden, sowie auf Ummagnetisierungsverlusten, sogenannten Hystereseverlusten- Die Wirbelstrom- und Hystereseverluste werden zusammen auch als Eisenverluste bezeichnet).

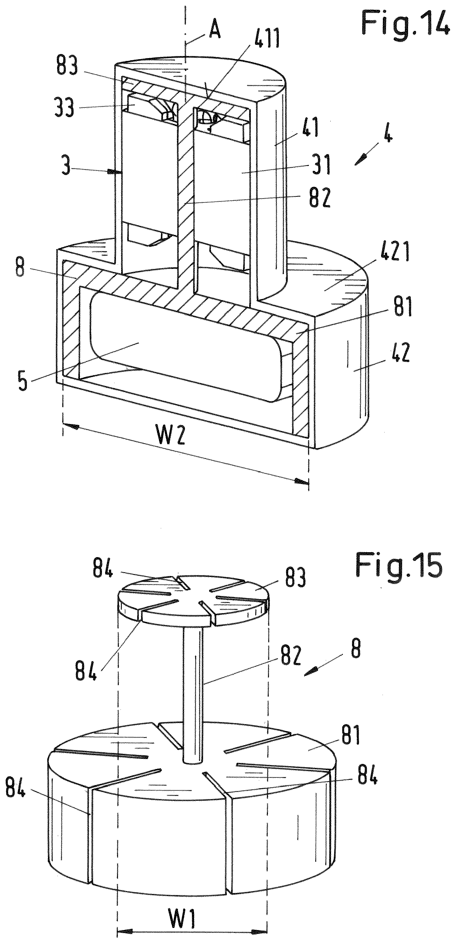

In Fig. 14 ist eine dritte Variante für die Ausgestaltung des Statorgehäuses 4 mit dem Wärmeleitelement 8 dargestellt. Zum besseren Verständnis zeigt Fig. 15 noch eine perspektivische Darstellung des Wärmeleitelements 8 aus Fig. 14.

Bei der dritten Variante umfasst das Wärmeleitelement 8 wie bei der zweiten Variante ebenfalls den Becher 81, welcher die Kontrolleinrichtung 5 umgibt, sowie den Stab 82 der sich von dem Becher 81 in axialer Richtung A durch das Innere des zentralen Polstücks 32 hindurch erstreckt. Zusätzlich ist bei der dritten Variante noch eine kreisscheibenförmige Platte 83 vorgesehen, welche an dem dem Becher 81 abgewandten Ende des Stabs 82 angeordnet ist und parallel zur radialen Ebene liegt. Die Platte 83 hat einen Durchmesser W1, welcher dem Innendurchmesser des zylindrischen ersten Gehäuseabschnitts 41 entspricht. Die Platte 83 ist darstellungsgemäss (Fig. 14) oberhalb der Spulen 33 des Stators 3 angeordnet und liegt an der inneren Stirnseite 411 an, welche den ersten Gehäuseabschnitt 41 in axialer Richtung A an der Saugseite 61 begrenzt. Bei dieser dritten Variante wird also zusätzlich Wärme auf der inneren Stirnseite 411 des Statorgehäuses 4 flächig verteilt und in den Kunststoff des Statorgehäuses 4 eingetragen. Somit wird auch die innere Stirnseite 411 als zusätzliche Fläche genutzt, in welche die Platte 83, die natürlich vorzugsweise auch aus Aluminium gefertigt ist, Wärme einträgt, welche dann von dem anströmenden Fluid abtransportiert wird.

In Fig. 15 ist noch eine weitere vorteilhafte Massnahme gezeigt, welche natürlich auch bei der ersten Variante (Fig. 12) oder bei der zweiten Variante (Fig. 13) realisiert sein kann. Das Wärmeleitelement 8 ist nämlich vorzugsweise mit einer Mehrzahl von Schlitzen 84 versehen, von denen sich jeder in der thermischen Flussrichtung der Wärme erstreckt, nämlich in radialer Richtung nach aussen. Wenn das Wärmeleitelement - wie bevorzugt - aus einem metallischen Material gefertigt ist, also insbesondere aus Aluminium, lassen sich Wirbelströme und die damit verbundenen Wirbelstromverluste in dem Wärmeleitelement 8 zumindest sehr stark reduzieren, während die thermische Ableitung der Wärme durch die Schlitze 84 nur vernachlässigbar beeinflusst wird. Bei der in Fig. 15 dargestellten dritten Variante des Wärmeleitelement 8 sind die in radialer Richtung verlaufenden Schlitze 84 sowohl in der Platte 83 als auch in dem Becher 82 vorgesehen.

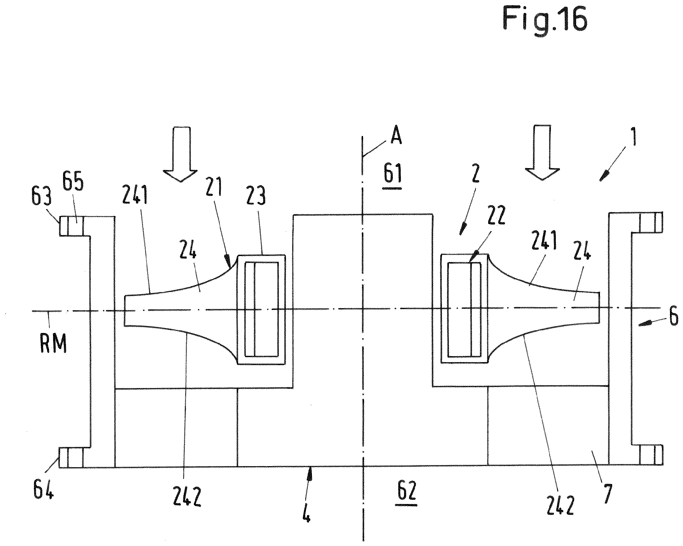

Im Folgenden werden anhand der Fig. 16 - Fig. 21 einige Varianten für die Ausgestaltung des Laufrads 21 des Rotors 2 erläutert. Alle diese Darstellungen sind schematisch und auf das für das Verständnis Ausreichende reduziert. Das Laufrad 21 umfasst die ringförmige Nabe 23, welche um den im Statorgehäuse 4 gekapselten Stator 3 herum angeordnet ist, sowie mehrere Flügel 24, welche fest mit der Nabe 23 verbunden sind. Die vorzugsweise aus Kunststoff bestehenden Flügel 24 können entweder einstückig mit der Nabe 23 hergestellt werden, oder die Flügel 24 werden separat von der Nabe 23 gefertigt und anschliessend fest mit der Nabe 23 verbunden, beispielsweise mit Hilfe eines Klebstoffs oder durch einen Schweissprozess.

Die Nabe 23 wird vorzugsweise zweistückig hergestellt, derart dass zunächst ein erster Teil der Nabe 23 hergestellt wird, in welchem eine Ausnehmung für den magnetisch wirksamen Kern 22 des Rotors 2 vorgesehen ist. In diese Ausnehmung wird dann der magnetisch wirksame Kern 22 eingelegt. Anschliessend wird ein zweites Teil der Nabe 23, das als Deckel ausgestaltet ist, fest mit dem ersten Teil der Nabe verbunden, vorzugsweise durch einen Schweissprozess, sodass der magnetisch wirksame Kern 22 hermetisch in der Nabe 23 gekapselt ist.

Wie dies insbesondere in Fig. 3 gut zu erkennen ist, sind die Flügel 24 des Laufrads 21 vorzugsweise jeweils so ausgestaltet, dass sie gegen die axiale Richtung A geneigt sind. Zum besseren Verständnis ist diese Neigung gegen die axiale Richtung A in den schematischen Fig. 16 bis Fig. 21 nicht dargestellt. In diesen Fig. 16 bis Fig. 21 ist jeweils der von den Flügeln 24 während der Rotation um die axiale Richtung A überstrichene Raum in einem Schnitt entlang der Drehachse - also einem Schnitt entlang der axialen Richtung A - dargestellt, sodass die Neigung der Flügel 24 gegen die axiale Richtung A, also gegen die jeweilige Schnittebene in den Fig. 16 - Fig. 21, nicht dargestellt ist. Diese Darstellungen entsprechen also jeweils einer senkrechten Projektion der Flügel 24 auf die jeweilige Zeichenebene.

Ferner zeigen die Fig. 16 - Fig. 21 das Laufrad 21 jeweils im Betriebszustand, wenn der magnetisch gelagerte Rotor 2 in der radialen Ebene, also in der magnetischen Mittelebene des Stators 3, bezüglich des Stators 3 zentriert ist. In den Fig. 16 bis Fig. 21 ist nur das Statorgehäuse 4 dargestellt. Die Pfeile ohne Bezugszeichen zeigen jeweils die Richtung an, in welcher der Fluidstrom, also insbesondere der Luftstrom fliesst. Darstellungsgemäss ist also jeweils oben die Saugseite 61 und unten die Druckseite 62. In den Fig. 16 bis Fig. 21 wird ferner auf eine geometrische Mittelebene RM Bezug genommen. Die geometrische Mittelebene RM ist diejenige zur axialen Richtung A senkrechte Ebene, welche durch die geometrische Mitte des magnetisch wirksamen Kerns 22 des Rotors 2 verläuft. Falls der Rotor 2 bezüglich des Stators 3 zentriert und unverkippt ist, dann fallen die geometrische Mittelebene RM und die radiale Ebene, also die magnetische Mittelebene des Stators 3, zusammen.

Vorzugsweise sind alle Flügel 24 des Laufrads 21 identisch ausgestaltet.

Fig. 16 zeigt eine schematische Schnittdarstellung einer ersten Variante des Rotors 2 mit dem Laufrad 21, welches die Nabe 23 und die Flügel 24 umfasst. Jeder Flügel 24 hat eine Eintrittskante 241, welche der Saugseite 61 zugewandt ist, sowie eine Austrittskante 242, welche der Druckseite 62 zugewandt ist. Bei dieser ersten Variante ist jeder Flügel 24 jeweils symmetrisch bezüglich der Mittelebene RM ausgestaltet und angeordnet. Die Höhe jedes Flügels 24 in axialer Richtung A nimmt von der Nabe 23 in radialer Richtung nach aussen ab. Die Eintrittskante 241 und die Austrittskante 242, die ja symmetrisch bezüglich der Mittelebene RM ausgestaltet sind, können wie in Fig. 16 gezeigt jeweils gekrümmt ausgestaltet sein. Natürlich ist es auch möglich, die Eintrittskante 241 und die Austrittskante 242 geradlinig, also ohne Krümmung, auszugestalten.

Wie bereits erwähnt ist der magnetische Luftspalt im magnetischen Kreis zwischen Rotor 2 und Stator 3 durch die vollständige Ummantelung des magnetischen Kerns 22 des Rotors 2 einerseits sowie des Stators 3 andererseits im Vergleich zu bekannten Drehantrieben, die als lagerloser Motor ausgestaltet sind, ziemlich gross. Daher ist es eine besonders bevorzugte Massnahme, dass der Rotor 2 mit dem Flügelrad 21 für eine fluiddynamische Stabilisierung des Rotors 2 während des Betriebs ausgestaltet ist. Insbesondere soll der Rotor 2 vorzugsweise so ausgestaltet sein, dass das den Lüfter 1 durchströmende Fluid, also beispielsweise die strömende Luft, den Rotor 2 bezüglich seiner Position in axialer Richtung A sowie gegen Verkippungen relativ zur radialen Ebene stabilisiert. Dadurch wird erreicht, dass der Rotor 2 durch das strömende Fluid bezüglich derjenigen Freiheitsgrade stabilisiert wird, bezüglich derer der Rotor 2 passiv magnetisch gelagert bzw. stabilisiert ist. Die fluiddynamische Stabilisierung unterstützt also die passive magnetische Lagerung bzw. Stabilisierung des Rotors 2. Durch die fluiddynamische Stabilisierung mittels des strömenden Fluids wird insbesondere auch die passive magnetische Axiallagerung des Rotors 2 gedämpft, sodass Schwingungen des Rotors 2 in axialer Richtung A unterdrückt oder zumindest stark gedämpft werden.

Im Folgenden werden nun anhand verschiedener Varianten in nicht abschliessender Aufzählung Massnahmen erläutert, wie der Rotor 2 zur fluiddynamischen Stabilisierung ausgestaltet werden kann. Es versteht sich, dass einzelne dieser Massnahmen auch miteinander kombiniert werden können.

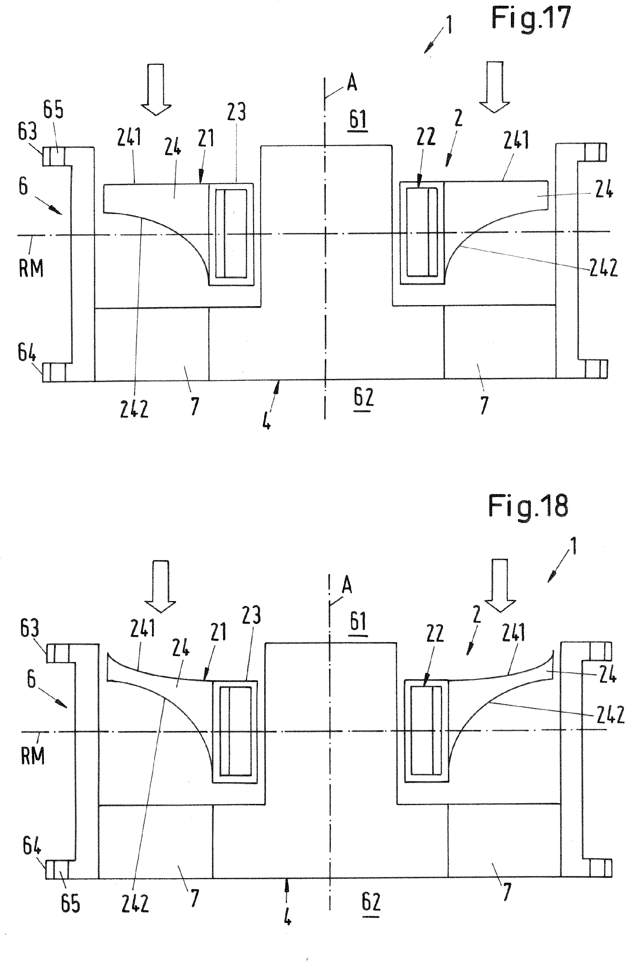

Fig. 17 zeigt eine Variante, bei welcher die Flügel 24 zum einen asymmetrisch ausgestaltet sind und zum anderen in Richtung der Saugseite 61 verschoben sind. Jeder Flügel 24 ist so ausgestaltet und angeordnet, dass sein Schwerpunkt deutlich ausserhalb der Mittelebene RM liegt und zwischen der Saugseite 61 und der Mittelebene RM liegt. Die Eintrittskante 241 erstreckt sich von der Nabe 23 geradlinig, also nicht gekrümmt, in radialer Richtung nach aussen, erstreckt sich also senkrecht zur axialen Richtung A, wobei die Eintrittskante 241 mit dem saugseitigen Ende der Nabe 23 fluchtet. Die Austrittskante 242 ist in ähnlicher Weise wie in der Variante, die in Fig. 16 dargestellt ist, in radialer Richtung gekrümmt ausgestaltet, allerdings auch in Richtung der Saugseite 61 verschoben.

Die in Fig. 18 dargestellte Variante ist ähnlich ausgestaltet wie die in Fig. 17 dargestellte, jedoch sind bei der Variante gemäss Fig. 18 die Flügel 24 - genauer gesagt ihr jeweiliger Schwerpunkt - noch weiter in Richtung der Saugseite 61 verschoben. Zudem ist auch jede Eintrittskante 241 gekrümmt ausgestaltet, wobei die Krümmung derart ist, dass das radial innenliegende Ende der Eintrittskante 241 mit dem saugseitigen Ende der Nabe 23 fluchtet, und das radial aussenliegende Ende der Eintrittskante 241 in Richtung der Saugseite 61 über das saugseitige Ende der Nabe 23 hinausragt.

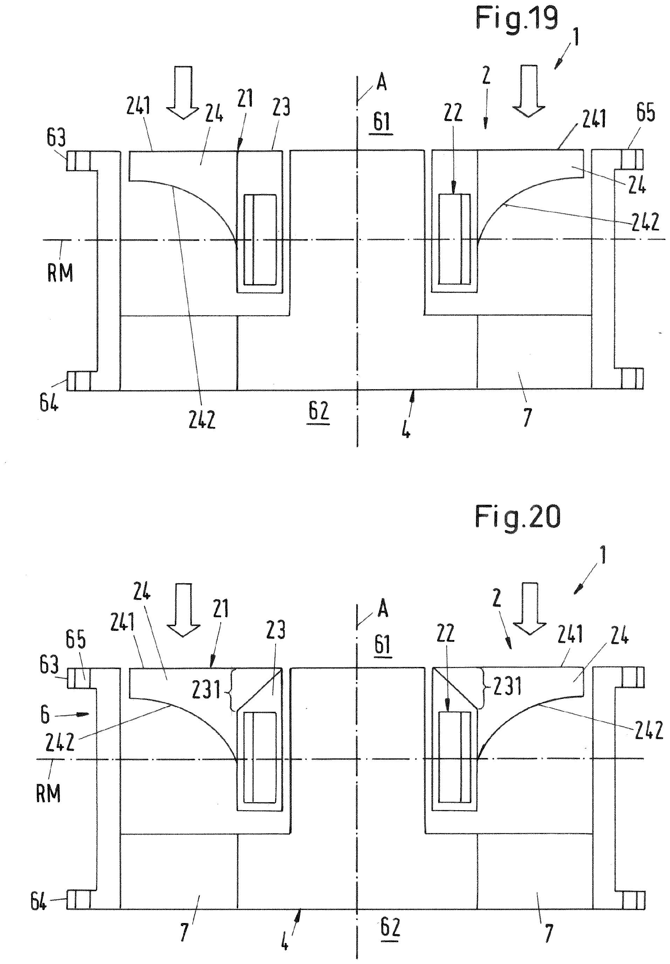

Bei der in Fig. 19 gezeigten Variante ist der magnetisch wirksame Kern 22 des Rotors 2 in Richtung des druckseitigen Endes der Nabe 23 verschoben. Der magnetisch wirksame Kern 22 ist also bezüglich der axialen Richtung A nicht mehr in der Nabe 23 zentriert sondern näher am druckseitigen Ende der Nabe 23 angeordnet als am saugseitigen Ende der Nabe 23. Jede Eintrittskante 241 erstreckt sich von der Nabe 23 geradlinig, also nicht gekrümmt, in radialer Richtung nach aussen, erstreckt sich also senkrecht zur axialen Richtung A, wobei jede Eintrittskante 241 mit dem saugseitigen Ende der Nabe 23 fluchtet. Die Austrittskante 242 ist jeweils in ähnlicher Weise wie in der Variante, die in Fig. 17 dargestellt ist, in radialer Richtung gekrümmt ausgestaltet, allerdings mündet die Austrittskante 242 darstellungsgemäss (Fig. 19) oberhalb des druckseitigen Endes der Nabe 23 in die Mantelfläche der Nabe 23, d.h. die Austrittskante 242 erstreckt sich bezüglich der axialen Richtung A nicht bis an das druckseitige Ende der Nabe 23. Selbstverständlich ist es auch bei der in Fig. 19 dargestellten Variante möglich, die Austrittskante 242 jeweils geradlinig, also ungekrümmt auszugestalten.

Die in Fig. 20 dargestellte Variante des Laufrads 21 ist ähnlich wie die in Fig. 19 dargestellten Variante ausgestaltet. Allerdings weist bei der in Fig. 20 dargestellten Variante die Nabe 23 des Laufrads 21 an ihrem saugseitigen Ende einen Einlaufbereich 231 auf, in welchem die Nabe 23 sich in Richtung der Saugseite 61 verjüngend ausgestaltet ist. In diesem Einlaufbereich 231 ist die Nabe 23 also kegel- oder kegelstumpfförmig ausgestaltet, wobei der Apex des Kegels saugseitig liegt. Der Einlaufbereich 231 ist bezüglich der axialen Richtung A darstellungsgemäss oberhalb des magnetisch wirksamen Kerns 22 angeordnet.

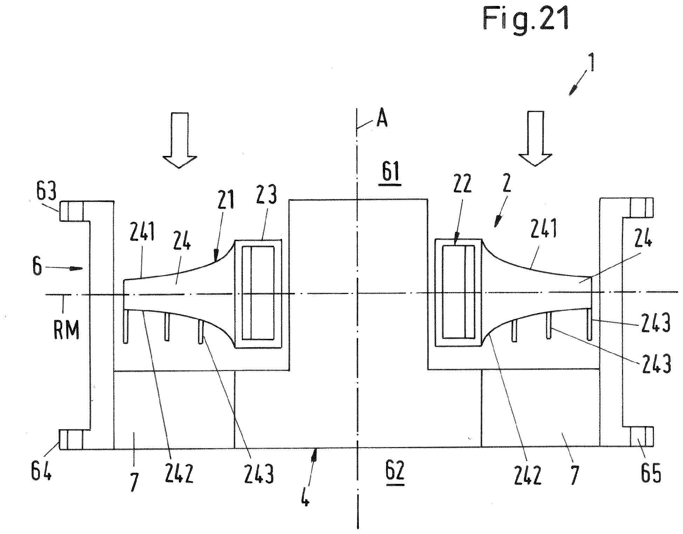

Die in Fig. 21 dargestellte Variante ist ähnlich ausgestaltet wie die in Fig. 16 dargestellte Variante. Allerdings sind bei der in Fig. 21 gezeigten Variante mehrere konzentrisch angeordnete Stabilisierungsringe 243 vorgesehen, von denen jeder an den Austrittskanten 243 aller Flügel 24 angeordnet ist und bezüglich der axialen Richtung A druckseitig über die Flügel 24 herausragt. Jeder Stabilisierungsring 243 ist koaxial mit dem Rotor 2 angeordnet und erstreckt sich jeweils über die Austrittskanten 242 aller Flügel 24. Bei der in Fig. 21 dargestellten Variante sind drei konzentrische Stabilisierungsringe 243 vorgesehen. Selbstverständlich ist es auch möglich, nur einen Stabilisierungsring 243 vorzusehen.

Wie bereits erwähnt, können die anhand der Fig. 16 bis Fig. 21 beschriebenen Varianten bzw. Massnahmen auch miteinander kombiniert werden. So ist es beispielsweise möglich, auch bei den Varianten gemäss Fig. 17 bis Fig. 20 jeweils einen oder mehrere Stabilisierungsring(e) 243 vorzusehen. Eine weitere vorteilhafte Massnahme, die bei allen Varianten verwirklicht sein kann, siehe Fig. 16 bis Fig. 21, ist es wenn jede Austrittskante unter einem Winkel gegen die axiale Richtung A in die Nabe 23 einmündet, der von 90° verschieden und insbesondere kleiner als 90° ist. Diese Massnahme ist sowohl für in radialer Richtung gekrümmte Austrittskannten 242 (siehe Fig. 16 bis Fig. 21) möglich als auch solche Austrittskanten (nicht dargestellt), welche geradlinig, also ungekrümmt ausgestaltet sind.

Ergänzend oder alternativ zur fluiddynamischen Stabilisierung kann auch eine aktive Dämpfung mit Hilfe der Spulen 33 bzw. der von ihnen erzeugten elektromagnetischen Felder vorgesehen sein. Dazu wird das von den Spulen 33 generierte Drehfeld, so orientiert, dass es kein Drehmoment mehr auf den Rotor 2 bewirkt, sondern das von den Permanentmagneten 221 generierte Magnetfeld abschwächt oder verstärkt. Das heisst, das von den Spulen generierte Drehfeld wird so eingestellt, dass der Stromzeiger in die gleiche oder in die entgegengesetzte Richtung zeigt wir der magnetische Flusszeiger, sodass zwischen diesen beiden Zeigern keine 90° Phasenverschiebung mehr herrscht.

Dieses Verfahren kann vorteilhaft auch dazu verwendet werden, um den Rotor besonders schnell abzubremsen. Dabei wird die im Rotor 2 vorhandene kinetische Energie dadurch vernichtet, dass man versucht die Magnetisierung der Permanentmagnete 221 im Rotor 2 zu ändern. Diese Vernichtung der kinetischen Energie des Rotors 2 führt zu einem raschen Abbremsen der Rotation des Rotors 2.

Eine weitere bevorzugte Massnahme besteht darin, dass ein Sensor 9 vorgesehen ist, mit welchem ein Druck oder ein Durchfluss des Fluidstroms ermittelbar ist, wobei der Sensor 9 mit der Kontrolleinrichtung 5 signalverbunden ist. Vorzugsweise ist die Kontrolleinrichtung 5 dann zur Regelung oder zur Steuerung des Drucks oder des Durchflusses ausgestaltet. Der Sensor 9 kann saugseitig oder druckseitig des Rotors 2 angeordnet sein.

Anhand der schematischen Darstellungen in den Fig. 22 bis Fig. 24 werden nun verschiedene Varianten erläutert, bei denen der Lüfter 1 für die Regelung oder für die Steuerung eines Fluidstroms, beispielsweise eines Luftstroms, ausgestaltet und angeordnet ist. Dabei wird mit beispielhaftem Charakter jeweils auf den Anwendungsfall Bezug genommen, dass der Lüfter 1 in eine Rohrleitung 100 integriert ist und in dieser einen regelbaren oder steuerbaren Fluidstrom generieren soll. Die Rohrleitung 100 ist in einem Raum 200 angeordnet. Dies kann ein Raum 200 sein, der chemische Resistenz erfordert, so wie dies beispielsweise in der Halbleiterindustrie der Fall sein kann.

Fig. 22 zeigt eine Variante, bei welcher der Lüfter 1 in die Rohrleitung 100 integriert ist, welche in dem Raum 200 verläuft. Der Lüfter 1 ist zwischen einem ersten Segment 101 und einem zweiten Segment 102 der Rohrleitung 100 angeordnet. Dazu ist der saugseitige Flansch 63 des Lüfters 1 fest mit einem Flansch des ersten Segments 101 verbunden, und der druckseitige Flansch 64 ist fest mit einem Flansch des zweiten Segments 102 verbunden. Der Fluidstrom, der von dem Lüfter 1 generiert wird, ist durch den Pfeil ohne Bezugszeichen angedeutet. Der Sensor 9 ist als Drucksensor oder als Durchflusssensor ausgestaltet und saugseitig, das heisst stromaufwärts des Lüfters 1 vorgesehen. Der Sensor 9 kann beispielsweise an der Rohrleitung 100 befestigt sein oder auch am Lüfter 1. Der Sensor 9 ist mit einer externen Logikeinheit 300 signalverbunden, zum Beispiel über eine Signalleitung 91 oder auch drahtlos. Die Logikeinheit 300 ist beispielsweise als speicherprogrammierbare Steuerung (PLC: programmable logic controller) ausgestaltet. An der Logikeinheit 300 wird das beispielsweise analoge Signal des Sensors 9 über das Kabel 72 der Kontrolleinrichtung 5 zugeführt. Die Kontrolleinrichtung 5 umfasst die notwendigen Regeleinrichtungen, um mit Hilfe des Signals des Sensors 9 den Fluidstrom in der Rohrleitung 100 zu regeln oder zu steuern. Mittels dieser Regeleinrichtungen kann der Fluidstrom auf einen vorgebbaren Sollwert geregelt werden.

Der Lüfter ist ferner mit einer Kommunikationsschnittstelle 400 verbunden, über welche ein Benutzer Daten eingeben oder auslesen kann. Selbstverständlich sind auch solche Ausführungen möglich, bei welchen der Sensor 9 druckseitig, also stromabwärts des Lüfters angeordnet ist, oder bei welchen sowohl saugseitig als auch druckseitig des Lüfters 1 ein Sensor 9 vorgesehen ist.

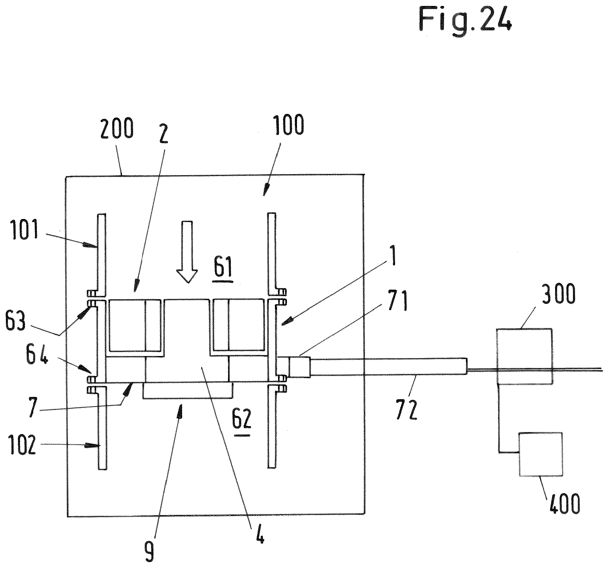

Für die Varianten, die in Fig. 23 und Fig. 24 dargestellt sind, werden nur die Unterschiede zu der in Fig. 22 dargestellten Variante erläutert. Ansonsten gelten die Erläuterungen zu Fig. 22 in gleicher oder sinngemäss gleicher Weise auch für die in Fig. 23 und Fig. 24 dargestellten Varianten.

Bei der in Fig. 23 dargestellten Variante ist der Sensor 9 direkt mit der Kontrolleinrichtung 5 im Statorgehäuse 4 des Lüfters 1 verbunden, beispielsweise über eine Sensorleitung 92. Dabei kann der Sensor 9 entweder direkt am Lüfter 1 oder auch an der Rohrleitung 100 befestigt sein. Fig. 23 zeigt eine Ausgestaltung, bei welcher der Sensor 9 druckseitig des Lüfters 1 angeordnet ist. Natürlich sind auch hier Ausgestaltungen möglich, bei denen der Sensor 9 saugseitig des Lüfters 1 angeordnet ist, oder bei denen sowohl saugseitig als auch druckseitig des Lüfters 1 ein Sensor 9 vorgesehen ist. Auch bei dieser direkten Signalverbindung zwischen dem Sensor 9 und der Kontrolleinrichtung 5 sind die notwendigen Auswerteeinrichtungen für die Sensorsignale sowie die Steuer- bzw. Regeleinrichtungen zum Einstellen des Fluidstroms bzw. zum Regeln des Fluidstroms direkt in die Kontrolleinrichtung 5 integriert.

Bei der in Fig. 24 dargestellten Variante ist der Sensor 9 direkt in den Lüfter 1 integriert. Der Sensor 9 kann beispielsweise am Gehäuse 6 des Lüfters 1 befestigt sein oder auch -wie in Fig. 24 gezeigt am Statorgehäuse 4. Dabei kann der Sensor 9 druckseitig (siehe Fig. 24) oder auch saugseitig am Statorgehäuse 4 befestigt sein. Natürlich sind auch hier Ausgestaltungen möglich, bei denen sowohl saugseitig als auch druckseitig ein Sensor 9 vorgesehen ist. Der Sensor 9 ist mit der im Statorgehäuse 4 angeordneten Kontrolleinrichtung 5 signalverbunden. Auch bei dieser Variante sind die notwendigen Auswerteeinrichtungen für die Sensorsignale sowie die Steuer- bzw. Regeleinrichtungen zum Einstellen des Fluidstroms bzw. zum Regeln des Fluidstroms direkt in die Kontrolleinrichtung 5 integriert. Insbesondere bei dieser Variante ist der Lüfter 1 mit dem vollständig integrierten Sensor 9, insbesondere einem Durchfluss- oder Drucksensor 9, versehen, sodass der Lüfter 1 ohne weitere zusätzlichen Komponenten den von ihm generierten Luftstrom auf einen vorgebbaren Sollwert für den Druck oder für den Durchfluss regeln kann.

## Patentansprüche

1. Lüfter mit einem Rotor (2) zum Erzeugen eines Fluidstroms und mit einem Stator (3), der mit dem Rotor (2) einen elektromagnetischen Drehantrieb zum Rotieren des Rotors (2) um eine axiale Richtung (A) bildet, wobei der Drehantrieb als Aussenläufer ausgestaltet ist, wobei der Rotor (2) einen magnetisch wirksamen Kern (22) umfasst, welcher ringförmig ausgestaltet ist, sowie ein Laufrad (21), welches eine Nabe (23) umfasst, auf der eine Mehrzahl von Flügeln (24) zur Erzeugung des Fluidstroms angeordnet sind, wobei der Stator (3) als Lager- und Antriebsstator ausgestaltet ist, mit welchem der Rotor (2) berührungslos magnetisch antreibbar und berührungslos magnetisch bezüglich des Stators (3) lagerbar ist, und wobei der Rotor (2) in einer zur axialen Richtung (A) senkrechten radialen Ebene aktiv magnetisch gelagert ist, **dadurch gekennzeichnet, dass** die Nabe (23) des Laufrads (21) den magnetisch wirksamen Kern (22) des Rotors (2) vollständig umschliesst, und dass der Stator (3) in einem Statorgehäuse (4) aus einem niederpermeablen Material eingekapselt ist.

2. Lüfter nach Anspruch 1, wobei das Laufrad (21) aus einem ersten Kunststoff besteht und das Statorgehäuse (4) aus einem zweiten Kunststoff besteht.

3. Lüfter nach einem der vorangehenden Ansprüche, welcher ein im Wesentlichen rohrförmiges Gehäuse (6) mit einer Saugseite (61) und mit einer Druckseite (62) umfasst, wobei der Rotor (2) und das Statorgehäuse (4) in dem Gehäuse (6) angeordnet sind, und wobei das Statorgehäuse (4) mittels einer Mehrzahl von Streben (7) im Gehäuse (6) fixiert ist.

4. Lüfter nach einem der vorangehenden Ansprüche, wobei das Statorgehäuse (4) einen ersten Gehäuseabschnitt (41) und einen zweiten Gehäuseabschnitt (42) aufweist, wobei der erste Gehäuseabschnitt (41) innerhalb vom Rotor (2) angeordnet ist und von dem magnetischen Kern (22) des Rotors (2) umgeben ist, und wobei der zweite Gehäuseabschnitt (42) einen Aussendurchmesser (D2) aufweist, welcher mindestens so gross ist wie ein Aussendurchmesser (DM) des magnetisch wirksamen Kerns (22) des Rotors (2).

5. Lüfter nach Anspruch 4, welcher eine Kontrolleinrichtung (5) zur Steuerung oder Regelung des Lüfters (1) umfasst, wobei die Kontrolleinrichtung (5) in dem zweiten Gehäuseabschnitt (42) des Statorgehäuses (4) angeordnet ist.

6. Lüfter nach Anspruch 5, bei welchem ein Sensor (9) vorgesehen ist, mit welchem ein Druck oder ein Durchfluss des Fluidstroms ermittelbar ist, wobei der Sensor (9) mit der Kontrolleinrichtung (5) signalverbunden ist, und die Kontrolleinrichtung (5) zur Regelung oder zur Steuerung des Drucks oder des Durchflusses ausgestaltet ist.

7. Lüfter nach einem der vorangehenden Ansprüche, wobei der Stator (3) eine Mehrzahl von Spulenkernen (31) umfasst, von denen sich jeder in radialer Richtung erstreckt, und wobei jeder Spulenkern (31) eine konzentrierte Wicklung (33) zur Erzeugung eines elektromagnetischen Drehfelds trägt.

8. Lüfter nach einem der vorangehenden Ansprüche, wobei der magnetisch wirksame Kerns (22) des Rotors (2) einen ringförmigen Rückschluss (222) und eine Mehrzahl von Permanentmagneten (221) umfasst, wobei der Rückschluss (222) zusammenhängend ausgestaltet ist und aus einem weichmagnetischen Material gefertigt ist, und wobei jeder Permanentmagnet (221) mit einem sichelförmigen Querschnitt ausgestaltet ist und in die radial innenliegende Seite des Rückschlusses (222) eingepasst ist.

9. Lüfter nach einem der Ansprüche 4-8, wobei im Statorgehäuse (4) ein Wärmeleitelement (8) zum Abführen von Wärme vorgesehen ist, und wobei das Wärmeleitelement (8) so ausgestaltet ist, dass es zumindest die Kontrolleinrichtung (5) umgibt.

10. Lüfter nach einem der vorangehenden Ansprüche, wobei der Rotor (2) zur fluiddynamischen Stabilisierung des Rotors (2) gegen Verkippungen ausgestaltet ist.

11. Lüfter nach einem der vorangehenden Ansprüche, wobei die Nabe (23) des Laufrads (21) ein saugseitiges Ende und ein druckseitiges Ende aufweist, und wobei der magnetisch wirksame Kern (22) des Rotors bezüglich der axialen Richtung näher am druckseitigen Ende als am saugseitigen Ende der Nabe (23) angeordnet ist.

12. Lüfter nach Anspruch 11, wobei die Nabe (23) des Laufrads (21) an ihrem saugseitigen Ende einen Einlaufbereich (231) umfasst, in welchem die Nabe (23) sich in Richtung des saugseitigen Endes verjüngend ausgestaltet ist.

13. Lüfter nach einem der vorangehenden Ansprüche, bei welchem jeder Flügel (24) eine Eintrittskante (241) aufweist, wobei sich jede Eintrittskante (241) senkrecht zur axialen Richtung (A) erstreckt.

14. Lüfter nach einem der vorangehenden Ansprüche, bei welchem jeder Flügel (24) eine Austrittskante (242) aufweist, wobei jede Austrittskante (242) unter einem Winkel gegen die axiale Richtung (8) in die Nabe einmündet, der von 90° verschieden ist.

15. Lüfter nach einem der vorangehenden Ansprüche, bei welchem jeder Flügel (24) eine Austrittskante (242) aufweist, und wobei an den Austrittskanten (242) mindestens ein Stabilisierungsring (243) vorgesehen ist, welcher koaxial mit dem Rotor (2) angeordnet ist.

## Claims

1. A fan having a rotor (2) for generating a fluid flow and having a stator (3) which, together with the rotor (2), forms an electromagnetic rotary drive for rotating the rotor (2) about an axial direction (A), the rotary drive being designed as an external rotor, the rotor (2) comprising a magnetically effective core (22) which is designed in an annular manner, and an impeller (21) which comprises a hub (23) on which a plurality of blades (24) for generating the fluid flow is arranged, the stator (3) being designed as a bearing and drive stator with which the rotor (2) can be magnetically driven without contact and can be magnetically levitated without contact with respect to the stator (3), and the rotor (2) being actively magnetically levitated in a radial plane perpendicular to the axial direction (A), **characterized in that** the hub (23) of the impeller (21) completely encloses the magnetically effective core (22) of the rotor (2), and **in that** the stator (3) is encapsulated in a stator housing (4) made of a low-permeable material.

2. A fan according to claim 1, the impeller (21) consisting of a first plastic and the stator housing (4) consisting of a second plastic.

3. A fan according to anyone of the preceding claims, comprising a substantially tubular housing (6) having a suction side (61) and a pressure side (62), wherein the rotor (2) and the stator housing (4) are arranged in the housing (6), and wherein the stator housing (4) is fixed in the housing (6) by means of a plurality of struts (7).

4. A fan according to anyone of the preceding claims, the stator housing (4) having a first housing portion (41) and a second housing portion (42), the first housing portion (41) being arranged within the rotor (2) and being surrounded by the magnetic core (22) of the rotor (2), and the second housing portion (42) having an outer diameter (D2) which is at least as large as an outer diameter (DM) of the magnetically effective core (22) of the rotor (2).

5. A fan according to claim 4, comprising a checking device (5) for controlling or regulating the fan (1), the checking device (5) being arranged in the second housing portion (42) of the stator housing (4).

6. A fan according to claim 5, in which a sensor (9) is provided with which a pressure or a flow rate of the fluid flow can be determined, the sensor (9) being signal-connected to the checking device (5), and the checking device (5) being designed for regulating or controlling the pressure or the flow rate.

7. A fan according to anyone of the preceding claims, the stator (3) comprising a plurality of coil cores (31) each of which extending in the radial direction, and each coil core (31) carrying a concentrated winding (33) for generating an electromagnetic rotary field.

8. A fan according to anyone of the preceding claims, the magnetically effective core (22) of the rotor (2) comprising an annular reflux (222) and a plurality of permanent magnets (221), the reflux (222) being designed contiguously and made of a soft magnetic material, and each permanent magnet (221) being designed with a sickle-shaped cross-section and being fitted into the radially inside side of the reflux (222).

9. A fan according to anyone of the claims 4 to 8, a heat conducting element (8) for dissipating heat being provided in the stator housing (4), and the heat conducting element (8) being designed in such a way that it surrounds at least the checking device (5).

10. A fan according to anyone of the preceding claims, the rotor (2) being designed for the fluid-dynamic stabilization of the rotor (2) against tilts.

11. A fan according to anyone of the preceding claims, the hub (23) of the impeller (21) having a suction-side end and a pressure-side end, and the magnetically effective core (22) of the rotor being arranged closer to the pressure-side end than to the suction-side end of the hub (23) with respect to the axial direction.

12. A fan according to claim 11, the hub (23) of the impeller (21) comprising an inlet area (231) at its suction-side end, in which the hub (23) is designed tapering in the direction of the suction-side end.

13. A fan according to anyone of the preceding claims, wherein each blade (24) has a leading edge (241), each leading edge (241) extending perpendicularly to the axial direction (A).

14. A fan according to anyone of the preceding claims, wherein each blade (24) has a trailing edge (242), each trailing edge (242) opening into the hub at an angle to the axial direction (8) different from 90°.

15. A fan according to anyone of the preceding claims, wherein each blade (24) has a trailing edge (242), and wherein at least one stabilizing ring (243) is provided at the trailing edges (242), the stabilizing ring (243) being arranged coaxially with the rotor (2).

## Revendications

1. Un ventilateur avec un rotor (2) pour générer un courant de fluide et avec un stator (3) qui forme avec le rotor (2) un entraînement rotatif électromagnétique pour faire tourner le rotor (2) autour d'une direction axiale (A), dans lequel l'entraînement rotatif est conçu comme un rotor extérieur, dans lequel le rotor (2) comprend un noyau à effet magnétique (22) qui est conçu de manière annulaire et une roue à aubes (21) qui comprend un moyeu (23) sur lequel une pluralité d'aubes (24) est disposée pour générer le courant de fluide, dans lequel le stator (3) est conçu comme un stator de palier et d'entraînement avec lequel le rotor (2) peut être entraîné magnétiquement sans contact et peut être lévité magnétiquement sans contact par rapport au stator (3), et dans lequel le rotor (2) est lévité magnétiquement de manière active dans un plan radial perpendiculaire à la direction axiale (A), **caractérisé en ce que** le moyeu (23) de la roue à aubes (21) entoure complètement le noyau à effet magnétique (22) du rotor (2), et **en ce que** le stator (3) est encapsulé dans un boîtier de stator (4) en un matériau à faible perméabilité.

2. Un ventilateur selon la revendication 1, dans lequel la roue à aubes (21) est constituée d'une première matière plastique et le boîtier de stator (4) est constitué d'une deuxième matière plastique.

3. Un ventilateur selon l'une des revendications précédentes, qui comprend un boîtier (6) sensiblement tubulaire avec un côté aspiration (61) et un côté pression (62), dans lequel le rotor (2) et le boîtier de stator (4) sont disposés dans le boîtier (6), et dans lequel le boîtier de stator (4) est fixé dans le boîtier (6) au moyen d'une pluralité d'entretoises (7).

4. Un ventilateur selon l'une des revendications précédentes, dans lequel le boîtier de stator (4) présente une première section de boîtier (41) et une deuxième section de boîtier (42), dans lequel la première section de boîtier (41) est disposée à l'intérieur du rotor (2) et est entourée par le noyau magnétique (22) du rotor (2), et dans lequel la deuxième section de boîtier (42) présente un diamètre extérieur (D2) qui est au moins aussi grand qu'un diamètre extérieur (DM) du noyau à effet magnétique (22) du rotor (2).

5. Un ventilateur selon la revendication 4, qui comprend un dispositif de contrôle (5) pour la commande ou le réglage du ventilateur (1), le dispositif de contrôle (5) étant disposé dans la deuxième section de boîtier (42) du boîtier de stator (4).

6. Un ventilateur selon la revendication 5, dans lequel un capteur (9) est prévu, avec lequel une pression ou un débit du courant de fluide peut être déterminé, dans lequel le capteur (9) est relié par signal au dispositif de contrôle (5), et le dispositif de contrôle (5) est conçu pour le réglage ou pour la commande de la pression ou du débit.

7. Un ventilateur selon l'une des revendications précédentes, dans lequel le stator (3) comprend une pluralité de noyaux de bobine (31), chacun s'étendant dans une direction radiale, et dans lequel chaque noyau de bobine (31) porte un enroulement concentré (33) pour générer un champ rotatif électromagnétique.

8. Un ventilateur selon l'une des revendications précédentes, dans lequel le noyau à effet magnétique (22) du rotor (2) comprend un reflux annulaire (222) et une pluralité d'aimants permanents (221), dans lequel le reflux (222) est conçu de manière continue et est fabriqué en un matériau magnétique doux, et dans lequel chaque aimant permanent (221) est conçu avec une section transversale en forme de faucille et est ajusté dans le côté radialement intérieur du reflux (222).

9. Un ventilateur selon l'une des revendications 4 à 8, dans lequel un élément conducteur de chaleur (8) est prévu dans le boîtier de stator (4) pour évacuer la chaleur, et dans lequel l'élément conducteur de chaleur (8) est conçu de telle sorte qu'il entoure au moins le dispositif de contrôle (5).

10. Un ventilateur selon l'une des revendications précédentes, dans lequel le rotor (2) est conçu pour la stabilisation fluido-dynamique du rotor (2) contre les basculements.

11. Un ventilateur selon l'une des revendications précédentes, dans lequel le moyeu (23) de la roue à aubes (21) présente une extrémité côté aspiration et une extrémité côté pression, et dans lequel le noyau à effet magnétique (22) du rotor est disposé plus près de l'extrémité côté pression que de l'extrémité côté aspiration du moyeu (23) par rapport à la direction axiale.

12. Un ventilateur selon la revendication 11, dans lequel le moyeu (23) de la roue à aubes (21) comprend une zone d'entrée (231) à son extrémité côté aspiration, dans laquelle le moyeu (23) est conçu en se rétrécissant en direction de l'extrémité côté aspiration.

13. Un ventilateur selon l'une des revendications précédentes, dans lequel chaque aube (24) présente un bord d'attaque (241), chaque bord d'attaque (241) s'étendant perpendiculairement à la direction axiale (A).

14. Un ventilateur selon l'une des revendications précédentes, dans lequel chaque aube (24) présente un bord de fuite (242), chaque bord de fuite (242) débouchant dans le moyeu selon un angle par rapport à la direction axiale (8) différent de 90°.

15. Un ventilateur selon l'une des revendications précédentes, dans lequel chaque aube (24) présente un bord de fuite (242), et dans lequel au moins un anneau de stabilisation (243) est prévu sur les bords de fuite (242), l'anneau de stabilisation (243) étant disposé coaxialement au rotor (2).
